# EUROPÄISCHE PATENTSCHRIFT

(11) **EP 3 914 542 B1**
(45) Veröffentlichungstag und Bekanntmachung des Hinweises auf die Patenterteilung: **31.07.2024**
(21) Anmeldenummer: 20708397.3
(22) Anmeldetag: 23.01.2020
(51) Int. Cl.: B65G 9/00, B65G 47/61

(54) **FÖRDERGUTBEHÄLTER FÜR EINE HÄNGEFÖRDERVORRICHTUNG UND ENTLADESTATION ZUM ENTLADEN DESSELBEN**
CONVEYED-GOODS CONTAINER FOR AN OVERHEAD CONVEYOR, AND UNLOADING STATION FOR UNLOADING SAME
CONTENANT POUR PRODUITS À TRANSPORTER POUR UN DISPOSITIF DE TRANSPORT SUSPENDU ET POSTE DE DÉCHARGEMENT SERVANT À SON DÉCHARGEMENT

(30) Priorität: 25.01.2019 AT 500592019
(43) Veröffentlichungstag der Anmeldung: 01.12.2021
(73) Patentinhaber: TGW Mechanics GmbH, 4600 Wels (AT)
(72) Erfinder: REISCHL, Josef, 4623 Gunskirchen (AT); RAUSCH, Martin, 4810 Gmunden (AT)
(74) Vertreter: Burger, Hannes
(86) Internationale Anmeldenummer: PCT/AT2020/060021
(87) Internationale Veröffentlichungsnummer: WO 2020/150762

(56) Entgegenhaltungen:
- EP-A1- 2 418 160
- WO-A1-2019/195871
- WO-A2-2018/130712

## Beschreibung

Die Erfindung betrifft einen Fördergutbehälter für eine Hängefördervorrichtung und eine Entladestation zum automatischen Entladen eines mit zumindest einem Fördergut beladenen Fördergutbehälters gemäß dem Oberbegriff der Ansprüche 1 und 11.

Die DE 10 2004 018 569 A1, DE 20 2017 106 993 U1 und WO 2018/130712 A2 offenbaren einen Fördergutbehälter mit einem Taschenkörper mit einer Vorderwand und einer Hinterwand, einem durch die Vorderwand und Hinterwand begrenzten Aufbewahrungsraum und einer seitlich am Taschenkörper zumindest bereichsweise zwischen der Vorder- und Hinterwand ausgebildeten Endladeöffnung. Der Taschenkörper ist zwischen einer Transportstellung (Schließstellung), in welcher der Aufbewahrungsraum volumenminimiert und das Fördergut mit dem Fördergutbehälter transportierbar ist, und einer Belade- oder Entladestellung (Öffnungsstellung), in welcher der Aufbewahrungsraum volumenmaximiert und das Fördergut durch die Entladeöffnung aus dem Fördergutbehälter manuell entnehmbar ist, umstellbar.

Die WO 2018/130712 A2 offenbart einen gattungsgemäßen Fördergutbehälter und eine gattungsgemäße Entladestation.

Vergleichbare Fördergutbehälter und zugehörige Hängefördervorrichtungen sind beispielsweise auch aus der EP 2 130 968 A1 oder EP 2 196 415 A bekannt. Die dort beschriebenen Fördergutbehälter bestehen aus flexiblen Materialien in Form einer Schlaufe, in der das Fördergut gehalten wird. Zum Beladen werden diese Transporttaschen von oben geöffnet, um das Fördergut in die Schlaufe einbringen zu können. Ein Entladen erfolgt dadurch, dass das Fördergut entweder seitlich aus der Schlaufe entnommen oder ausgestoßen wird oder beispielweise gemäß der EP 2 130 968 A1 die Schlaufe nach unten geöffnet wird.

Die WO 2014/044601 A1 offenbart ein automatisches Entladen eines Fördergutes aus einem Fördergutbehälter, bei dem der über einen Hängeträger an einem Transportträger aufgehängte Fördergutbehälter um eine senkrecht zur Hängefördervorrichtung verlaufende Kippachse gekippt wird.

Die EP 2 418 160 A1 offenbart eine Hängefördervorrichtung zum Transportieren von Fördergut mit einem Fördergutbehälter, welcher in einer Beladestation zum Beladen eines Fördergutbehälters oder in einer Entladestation zum Entladen eines Fördergutbehälters aus seiner quer zur Förderrichtung befindlichen Transportposition in eine in Förderrichtung verlaufende Position gedreht wird, wobei gleichzeitig eine obere Belade- und/oder Endladeöffnung geöffnet wird. Die Rückdrehung erfolgt nur durch Schwerkraft.

Die WO 2019/195871 A1, die ein Dokument zum Stand der Technik gemäß Artikel 54 (3) EPÜ darstellt, offenbart eine Entladestation zum automatischen Entladen eines mit zumindest einem Fördergut beladenen Fördergutbehälters.

Eine Aufgabe der Erfindung ist es, einen verbesserten Fördergutbehälter anzugeben. Insbesondere soll der Fördergutbehälter eine sichere Beladung mit einem Fördergut, einen sicheren Transport eines Fördergutes und ein zuverlässiges Entladen an einer automatischen Entladestation erlauben. Eine Aufgabe der Erfindung ist es, eine Entladestation zum automatischen Entladen eines Fördergutbehälters anzugeben, bei dem der Entladevorgang bei hoher Leistung zuverlässig durchgeführt werden kann.

Die Aufgabe der Erfindung wird durch die Merkmale des Anspruches 1 gelöst.

Nach einem ersten Aspekt der Erfindung, bildet der erste Hinterwandabschnitt in der Transportstellung des Taschenkörpers zwischen dem ersten Seitenrand und zweiten Seitenrand eine Transportauflage aus, welche eine in Richtung des Seitenwandanschlages abfallende Transportauflagefläche ausbildet. Das gewissermaßen vordefinierte "Gefälle" in Richtung zum Seitenwandanschlag wirkt sich besonders günstig beim Beladen des Fördergutbehälters aus. Zum Beladen wird der Taschenkörper vorerst in die Beladestellung umgestellt und das Fördergut in den Aufbewahrungsraum zwischen der Vorder- und Hinterwand eingebracht. Das Fördergut liegt nun auf der Bodenplatte auf. Danach wird der Taschenkörper aus der Beladestellung in die Transportstellung umgestellt. Dabei wird die Bodenplatte verschwenkt und das Fördergut gleitet auf der Bodenplatte in Richtung zum ersten Hinterwandabschnitt, sofern dieses nicht bereits gegen den ersten Hinterwandabschnitt positioniert ist. Trifft das Fördergut mit einer Kante auf das vordefinierte "Gefälle", erfährt es eine Kippbewegung in Richtung zum Seitenwandanschlag, ehe der Taschenkörper vollständig in die Transportstellung umgestellt ist. Ist der Fördergutbehälter mit einem Fördergut beladen und der Taschenkörper mit dem Fördergut in die Transportstellung umgestellt worden, liegt das Fördergut am ersten Hinterwandabschnitt auf und wird dieses von der Bodenplatte und dem zweiten Hinterwandabschnitt klemmend gehalten. Die Klemmkraftkomponenten stellen sich in Abhängigkeit vom Gewicht des Fördergutes ein. Kombiniert mit dem biegeschlaffen Material im ersten Hinterwandabschnitt und zweiten Hinterwandabschnitt schmiegt sich das Material besonders gut an das Fördergut an. Dies verhindert eine Bewegung des Fördergutes, sodass während dem Transport des Fördergutbehälters eine "Rutschbewegung" entlang dem definierten "Gefälle" verhindert wird. Das Fördergut kann besonders zuverlässig transportiert werden, selbst wenn beim Beladen des Fördergutbehälters das Fördergut nicht gegen den Seitenwandanschlag angelegt wird. Es ist auch nicht zwingend erforderlich, dass das Fördergut für den Transport am Seitenwandanschlag anliegen muss, um ein Hinausfallen des Fördergutes aus dem Fördergutbehälter zu vermeiden.

Außerdem reicht ein einziger Seitenwandanschlag aus, welcher der Belade- und/oder Entladeöffnung gegenüberliegt. Der Produktionsaufwand des Fördergutbehälters kann minimiert und die Herstellkosten reduziert werden. Ebenso lassen sich hohe Transportgeschwindigkeiten an der Hängefördervorrichtung realisieren.

Von Vorteil ist auch, wenn die Transportauflage durchgehend zwischen dem ersten Seitenrand und zweiten Seitenrand ausgebildet ist. Es hat also keine unerwünschte Auswirkung wo ein Fördergut am ersten Hinterwandabschnitt zu liegen kommt. Damit kann der Beladevorgang durch eine Person zum manuellen Beladen oder einen Beladeroboter zum automatischen Beladen unkompliziert erfolgen. Außerdem eignet sich der Fördergutbehälter für Fördergüter mit unterschiedlichsten Abmessungen und ist demnach vielseitig einsetzbar.

Nach einem zweiten Aspekt der Erfindung, bildet der zweite Hinterwandabschnitt in der Transportstellung des Taschenkörpers zwischen dem ersten Seitenrand und zweiten Seitenrand eine in Richtung der Belade- und/oder Endladeöffnung verjüngende Stützwandung aus, sodass das Fördergut zwischen der Bodenplatte im ersten Vorderwandabschnitt und der Stützwandung im zweiten Hinterwandabschnitt klemmend gehalten wird. Mit dieser Maßnahme kann die Klemmwirkung durch die Bodenplatte und die spezielle Stützwandung (aus biegeschlaffem Material) nochmals verbessert werden. Damit lassen sich auch Fördergüter transportieren, welche ein geringes Eigengewicht aufweisen.

Nach einem dritten Aspekt der Erfindung, bildet der erste Hinterwandabschnitt in der Beladeund/oder Endladestellung des Taschenkörpers zwischen dem ersten Seitenrand und zweiten Seitenrand eine gegenüber die Bodenplatte vorragende Führungswandung aus, welche eine sich in Richtung der Belade- und/oder Endladeöffnung verjüngende Führungswandfläche ausbildet. Dies ermöglicht eine zumindest zeitweise seitliche Führung des Fördergutes während des Entladevorganges, insbesondere an der automatischen Entladestation.

Nach einer vorteilhaften Ausgestaltung der Erfindung, ist die Führungswandung durchgehend zwischen dem ersten Seitenrand und zweiten Seitenrand ausgebildet. Konkret erstreckt sich die Führungswandung zwischen dem Seitenwandanschlag und dem ersten Seitenrand und die Führungswandfläche mündet in die Belade- und/oder Entladeöffnung. Die Führungswandung bildet also keine Störkonturen, wo sich ein Fördergut verkanten könnte. Das begünstigt das Entladen des Fördergutbehälters.

Gemäß einer vorteilhaften Ausgestaltung ist es vorgesehen, dass der erste Hinterwandabschnitt des Taschenkörpers zwischen dem ersten Seitenrand und zweiten Seitenrand eine Führungswandung ausbildet, welche in einem Wandabschnittsteil eine derart gestaltete Betätigungswandfläche ausbildet, mittels welcher
- das Fördergut in Horizontalrichtung (H) mit einer ersten Kraftkomponente und in Vertikalrichtung (V) mit einer zweiten Kraftkomponente, oder
- das Fördergut in Horizontalrichtung (H) mit einer ersten Kraftkomponente, in Vertikalrichtung (V) mit einer zweiten Kraftkomponente und in Tiefenrichtung (T) mit einer dritten Kraftkomponente
beaufschlagt wird, wenn der Taschenkörper von der Transportstellung in die Endladestellung umgestellt wird.

Die Führungswandung, welche einen Materialabschnitt des biegeschlaffen Materials der Hinterwand bildet, wird durch die Umstellbewegung des Taschenkörpers von der Transportstellung in die Endladestellung "schlagartig" aufgespannt. Dadurch wird von der Führungswandung auf das Fördergut in Horizontalrichtung (H) eine erste Kraftkomponente, in Vertikalrichtung (V) eine zweite Kraftkomponente und/oder in Tiefenrichtung (T) eine dritte Kraftkomponenten ausgeübt. Dabei wird das Fördergut von der und durch die Führungswandung auf die Bodenplatte "gestoßen", sodass kein Verkanten und eine zentrale Abgabe des Fördergutes vom Fördergutbehälter möglich ist. Der "Stoßimpuls" auf das Fördergut kann durch die Umstellgeschwindigkeit des Taschenkörpers von der Transportstellung in die Endladestellung beeinflusst werden. Es kann sich von Vorteil erweisen, dass die Umstellgeschwindigkeit zu Beginn der Umstellbewegung höher ist als am Ende der Umstellbewegung. Grundsätzlich kann aber die Umstellgeschwindigkeit auch konstant sein. Bevorzugt wird die Umstellbewegung des Taschenkörpers von der Transportstellung in die Endladestellung kontinuierlich durchgeführt.

Das Rahmengestell lässt sich ohne großem Kraftaufwand um eine bevorzugt im Wesentlichen horizontal ausgerichtete Achse relativ zum Hängeträger schwenken, wodurch der Öffnungsvorgang und der Schließvorgang des Taschenkörpers besonders einfach ausgeführt werden kann.

Das Rahmengestell umfasst gemäß der Erfindung entweder Querstreben oder Querstreben und mit diesen verbundene Längsstreben, wobei die Vorderwand mit dem zweiten Vorderwandabschnitt an einer vorderen Querstrebe und die Hinterwand mit dem zweiten Hinterwandabschnitt an einer hinteren Querstrebe angebracht sind.

In einer vorteilhaften Ausgestaltung der Erfindung weist das Rahmengestell Längsstreben und Querstreben auf, die miteinander verbunden sind. Das Rahmengestell kann eine rechteckförmige oder eine im Wesentlichen quadratischen Außenkontur ausbilden. Unter einer rechteckigen und im Wesentlichen quadratische Außenkontur ist in diesem Zusammenhang nicht nur eine korrekte Quadrat- oder Rechteckform zu verstehen, sondern auch eine Außenkontur mit abgerundeten Ecken oder an der Querstrebe angeordnetem Positioniermittel.

Sind die Querstreben und Längsstreben im Wesentlichen mit gleicher Länge ausgebildet, wird der Aufbewahrungsraum auf ein breites Spektrum an Fördergütern optimiert. Insbesondere ist auch von Vorteil, dass in der Entladestellung die Entladeöffnung zwischen dem zweiten Vorderwandabschnitt und zweiten Hinterwandabschnitt weit aufgespannt ist, sodass der Entladevorgang besonders zuverlässig und einfach über die Entladeöffnung durchgeführt werden kann. Umgekehrt kann auch ein Beladevorgang des Fördergutbehälters besonders einfach und zuverlässig über die Beladeöffnung durchgeführt werden. Die Entladeöffnung bildet also auch die Beladeöffnung. Prinzipiell kann die Beladung auch von oben durch das Rahmengestell hindurch durchgeführt werden. Das Beladen kann automatisch oder manuell durchgeführt werden.

Von Vorteil ist auch, wenn die vordere Querstrebe einen ersten Strebenschaft und einen zweiten Strebenschaft umfasst, welche voneinander getrennt an den Längsstreben rechtwinkelig vorragen und aufeinander zulaufen. Der Hängeträger ist an der vorderen Querstrebe schwenkbar gelagert. Die Querstrebe umfasst den ersten Strebenschaft und zweiten Strebenschaft, welche zugleich mit je einem Strebenkopf versehen sind, welche der axialen Festlegung des Rahmengestelles relativ zum Hängeträger dienen.

Nach einer vorteilhaften Ausgestaltung umfasst der zweite Vorderwandabschnitt eine durch Umklappen des Materialendbereiches gebildete Schlaufe, durch welche die vordere Querstrebe oder der erste Strebenschaft und zweite Strebenschaft der vorderen Querstrebe hindurchgeführt ist. Die Schlaufe dient der gelenkigen Aufnahme der vorderen Querstrebe oder des ersten Strebenschaftes und zweiten Strebenschaftes.

Gemäß der Erfindung ist es vorgesehen, dass die Vorderwand am zweiten Vorderwandabschnitt einen Materialausschnitt ausbildet, welcher von dem Hängeträger durchragt wird. Dadurch wird eine unerwünschte Verlagerung der Vorderwand relativ gegenüber dem Rahmengestell begrenzt oder vermieden und eine Zentrierung der Vorderwand relativ gegenüber dem Rahmengestell erreicht.

Nach einer vorteilhaften Ausgestaltung umfasst der zweite Hinterwandabschnitt eine durch Umklappen des Materialendbereiches gebildete Schlaufe, durch welche die hintere Querstrebe hindurchgeführt ist. Die Schlaufe dient der gelenkigen Aufnahme der hinteren Querstrebe.

Gemäß der Erfindung ist es auch vorgesehen, dass die hintere Querstrebe ein Positioniermittel und die Hinterwand am zweiten Hinterwandabschnitt einen Materialausschnitt umfasst, welcher von dem Positioniermittel durchragt wird. Dadurch wird eine unerwünschte Verlagerung der Hinterwand relativ gegenüber dem Rahmengestell begrenzt oder vermieden und eine Zentrierung der Hinterwand relativ gegenüber dem Rahmengestell erreicht.

Von Vorteil ist, wenn das Positioniermittel durch eine an der hinteren Querstrebe U-förmig gestaltete Ausformung gebildet ist, welche den Materialausschnitt durchragt.

Dabei erweist es sich von Vorteil, wenn der zweite Hinterwandabschnitt in dem das Positioniermittel umgrenzenden und an den Materialausschnitt angrenzenden Randbereich abschnittsweise oder umfänglich mit zumindest einem Verstärkungsanschlag versehen ist. Dadurch wird ein Überschieben / Aufschieben der Schlaufe am Positioniermittel verhindert, auch wenn der Fördergutbehälter um eine in Transportrichtung parallel verlaufende Achse verschwenkt wird, wie dies insbesondere an der nachfolgend beschriebenen Entladestation der Fall ist.

Die Aufgabe der Erfindung wird auch durch die Merkmale des Anspruches 11 gelöst.

Zum Entladen eines Fördergutes aus dem Fördergutbehälter wird
i) in einem Schritt durch die Öffnungs- und Schließvorrichtung der Taschenkörper aus der Transportstellung (Schließstellung) in die Belade- und/oder Entladestellung (Öffnungsstellung) verstellt, und
ii) in einem Schritt durch die Entladevorrichtung der Fördergutbehälter mit dem Taschenkörper um eine im Wesentlichen parallel zur Längserstreckung der Hängefördervorrichtung verlaufende Längsachse aus einer Bereitstellposition in eine Entladeposition gekippt, wodurch das Fördergut durch die Entladeöffnung aus dem Fördergutbehälter abgegeben wird.

Die Abgaberichtung des Fördergutes verläuft in einer quer zur Transportrichtung des Fördergutbehälters verlaufenden Abgabeebene. Das Fördergut kann also über einen nur sehr kurzen Abgabeweg transportiert werden, wodurch die Abgabezeit gegenüber den aus dem Stand der Technik bekannten Entladestationen deutlich verkürzt wird. Auch kann eine Übernahmeebene, auf welche das Fördergut abgegeben werden soll, im Wesentlich auf Höhe der Entladeöffnung gelegt werden, sodass eine besonders schonende Übergabe des Fördergutes auf die Übernahmeebene möglich ist. Die Übernahmeebene wird beispielweise durch eine Fördervorrichtung definiert. Der Taschenkörper kann noch vor dem Kippen des Fördergutbehälters aus der Bereitstellposition in die Entladeposition in die Entladestellung verstellt werden, oder es wird der Fördergutbehälter während dem Öffnungsvorgang des Taschenkörpers bereits aus der Bereitstellposition in die Entladeposition in die Entladestellung verstellt.

Günstig ist, wenn die Öffnungs- und Schließvorrichtung eine Betätigungsvorrichtung zum automatischen Öffnen und Schließen des Taschenkörpers umfasst, durch welche das Rahmengestell relativ zum Hängeträger um eine Achse derart schwenkbar ist, dass der Taschenkörper zwischen der Transportstellung (Schließstellung) und der Belade- und/oder Entladestellung (Öffnungsstellung) umstellbar ist.

Der Taschenkörper kann durch das vorzugsweise vorhandene Rahmengestell zwischen der Transportstellung und der Belade- und/oder Entladestellung umgestellt werden. Dadurch ergibt sich ein besonders einfacher Aufbau des Fördergutbehälters. Auch die Öffnungs- und Schließvorrichtung kann besonders einfach aufgebaut werden.

Es erweist sich auch als besonders vorteilhaft, wenn die Betätigungsvorrichtung eine Mitnehmermechanik mit einem in Transportrichtung des Fördergutbehälters
- stromaufwärts gelegenen Einlaufabschnitt,
- stromabwärts gelegenen Auslaufabschnitt, und
- zwischen dem Einlaufabschnitt und Auslaufabschnitt angeordneten Endladeabschnitt umfasst, wobei der Einlaufabschnitt eine mit dem Rahmengestell derart in einen Anlagekontakt bringbare geneigte Führungskulisse ausbildet, dass das Rahmengestell während des Antransportes des Fördergutbehälters in die Entladestation verschwenkt wird, wodurch der Taschenkörper aus der Transportstellung in die Belade- und/oder Entladestellung umgestellt wird.

Die Mitnehmermechanik benötigt keinen Antrieb und ist somit einfach aufgebaut. Der Einlaufabschnitt umfasst eine mit dem Rahmengestell derart in einen Anlagekontakt bringbare geneigte Führungskulisse, dass das Rahmengestell zwischen verschiedenen Kippstellungen verstellt und dabei der Taschenkörper aus der Transportstellung in die Belade- und/oder Entladestellung umgestellt wird. Das Umstellen zwischen Transportstellung und Belade- und/oder Entladestellung kann sehr sanft durchgeführt werden. Der Fördergutbehälter wird schonend behandelt. Außerdem kann sich durch den fortwährenden Öffnungsvorgang des Taschenkörpers das Fördergut im Aufbewahrungsraum zentrieren, was die Abgabe des Fördergutes aus dem Fördergutbehälter begünstigt.

Von Vorteil ist auch, wenn der Endladeabschnitt eine mit dem Rahmengestell derart in einen Anlagekontakt bringbare im Wesentlichen horizontale Führungskulisse ausbildet, dass das Rahmengestell während des Entladevorganges in der verschwenkten Auslenkstellung gehalten wird, wodurch auch der Taschenkörper in der Öffnungsstellung verbleibt.

Der Fördergutbehälter kann während dessen Kippbewegung geführt werden. Die Führungskulisse verläuft parallel zur Transportrichtung des Fördergutbehälters, ebenso eine Kippachse.

Es erweist sich auch von Vorteil, wenn der Auslaufabschnitt eine mit dem Rahmengestell derart in einen Anlagekontakt bringbare geneigte Führungskulisse ausbildet, dass das Rahmengestell während des Abtransportes des Fördergutbehälters aus der Entladestation verschwenkt wird, wodurch der Taschenkörper aus der Belade- und/oder Entladestellung in die Transportstellung umgestellt wird.

Der Auslaufabschnitt umfasst eine mit dem Rahmengestell derart in einen Anlagekontakt bringbare geneigte Führungskulisse, welche das Rahmengestell zwischen verschiedenen Kippstellungen verstellt und dabei der Taschenkörper aus der Belade- und/oder Entladestellung (Öffnungsstellung) in die Transportstellung (Schließstellung) umgestellt wird. Das Umstellen zwischen der Belade- und/oder Entladestellung und Transportstellung kann sehr sanft durchgeführt werden. Der Fördergutbehälter wird schonend behandelt.

Es erweist sich auch als günstig, wenn die Hängefördervorrichtung zum Antransport des Fördergutbehälters in die Entladestation und Abtransport des Fördergutbehälters aus der Entladestation durch eine Antriebsvorrichtung oder durch Schwerkraft bewegbare Transportträger umfasst, wobei der Transportträger und der Hängeträger gelenkig miteinander gekoppelt sind, wodurch der Hängeträger um eine im Wesentlichen parallel zur Hängefördervorrichtung verlaufende Achse relativ zum Transportträger schwenkbar ist.

Die Transportträger können durch einen Reibschlussantrieb oder einen Formschlussantrieb bewegt werden. Auch ist eine Ausführung möglich, bei der die Transportträger durch einen Eigenantrieb autonom bewegt werden können. Die Transportträger können sehr dynamisch zu der Entladestation antransportiert und von der Entladestation abtransportiert werden, was eine hohe Entladeleistung begünstigt.

Anderenfalls können die Transportträger aber auch durch die Schwerkraft transportiert werden, sofern die Profilschiene, auf welcher die Transportträger bewegt werden, ein Gefälle aufweist. Diese Ausführung bietet sich an, wenn die Investitionskosten niedrig gehalten werden sollen.

Es kann auch vorgesehen werden, dass die Öffnungs- und Schließvorrichtung der Entladestation eine Feststellvorrichtung zur Arretierung des Transportträgers während eines Entladevorganges des Fördergutbehälters zugeordnet ist.

Der Transportträger wird zum Entladen des Fördergutbehälters zeitweise arretiert, wodurch während der Kippbewegung des Fördergutbehälters eine ungewollte Bewegung des Transportträgers und des Fördergutbehälters in Transportrichtung und/oder quer zur Transportrichtung vermieden wird. Der Entladevorgang kann auch bei großen und/oder schweren Fördergütern besonders zuverlässig durchgeführt werden.

Auch ist es möglich, dass die Öffnungs- und Schließvorrichtung der Entladestation eine Führungsvorrichtung zur Seitenführung des Transportträgers während einer Transportbewegung des Transportträgers durch die Hängefördervorrichtung zum Antransport des Fördergutbehälters in die Entladestation und Abtransport des Fördergutbehälters aus der Entladestation umfasst.

Der Transportträger wird zum Entladen des Fördergutbehälters seitlich geführt, wodurch während der Kippbewegung des Fördergutbehälters ein ungewolltes Kippen des Transportträgers um eine in Transportrichtung verlaufende Achse vermieden wird. Der Entladevorgang kann auch bei großen und/oder schweren Fördergütern besonders zuverlässig durchgeführt werden.

Eine vorteilhafte Ausgestaltung ist auch möglich, wenn die Betätigungsvorrichtung der Entladevorrichtung einen mittels eines Antriebs um eine parallel zur Transportrichtung der Fördergutbehälter verlaufende Achse zwischen einer Ausgangsstellung und einer Betätigungsstellung kippbaren Rahmen umfasst und die Betätigungsvorrichtung der Öffnungs- und Schließvorrichtung am Rahmen gelagert ist.

Die Öffnungs- und Schließvorrichtung wird mit dem zwischen der Ausgangsstellung und der Betätigungsstellung kippbaren Rahmen gemeinsam bewegt, wodurch ein Öffnungsvorgang des Taschenkörpers und der Ankippvorgang des Fördergutbehälters simultan und/oder ein Schließvorgang des Taschenkörpers und der Rückkippvorgang des Fördergutbehälters simultan ausgeführt werden können. Der Entladevorgang kann dadurch zusätzlich beschleunigt werden. Außerdem kann der Entladevorgang ohne Stillstand der Transportbewegung durchgeführt werden. Grundsätzlich kann aber die Transportgeschwindigkeit der Transportträger und des Fördergutbehälters auf der Transportbewegung entlang der Entladestation variieren.

Zum besseren Verständnis der Erfindung wird diese anhand der nachfolgenden Figuren näher erläutert.

Es zeigen jeweils in stark vereinfachter, schematischer Darstellung:
- Fig. 1: eine Hängefördervorrichtung zum Transport von Fördergutbehältern, in perspektivische Ansichten;
- Fig. 2a, 2b: eine Ausfiihrungsform eines Fördergutbehälters nach einem ersten Aspekt der Erfindung, Fig. 2a in der Transportstellung und Fig. 2b in der Beladestellung oder Entladestellung (Fördergut nicht eingetragen), in perspektivische Ansichten;
- Fig. 3a, 3b: den Fördergutbehälter in der Transportstellung (Fördergut schematisch eingetragen), in Ansicht von hinten und Draufsicht;
- Fig. 4a bis 4c: eine Ausfiihrungsform eines Fördergutbehälters nach einem zweiten Aspekt der Erfindung, Fig. 4a in der Transportstellung (Fördergut nicht eingetragen), Fig. 4b in der Beladestellung oder Entladestellung (Fördergut schematisch eingetragen) und Fig. 4c in der Beladestellung oder Entladestellung (Fördergut nicht eingetragen), in unterschiedlichen Ansichten;
- Fig. 4d: eine modifizierte Ausführungsform eines Fördergutbehälters nach dem zweiten Aspekt der Erfindung, in der Beladestellung oder Entladestellung (Fördergut nicht eingetragen), in perspektivischer Ansicht;
- Fig. 5a, 5b: eine Ausführungsform eines Fördergutbehälters nach einem dritten Aspekt der Erfindung, in der Transportstellung (Fördergut schematisch eingetragen), in verschiedenen Ansichten;
- Fig. 6: eine Ausschnittsvergrößerung aus Fig. 3a mit einer Ansicht auf ein Positioniermittel und einen Verstärkungsanschlag, in einer ersten Ausführung;
- Fig. 6a, 6b: eine Ausschnittsvergrößerung aus Fig. 3a mit einer Ansicht auf ein Positioniermittel und einen Verstärkungsanschlag, in einer zweiten Ausführung;
- Fig. 7: einen Hängeträger für den Fördergutbehälter, mit abgenommener erster Hängeträgerhälfte und einer Detailansicht auf eine zweite Hängeträgerhälfte und einen Tailausschnitt des Rahmengestelles;
- Fig. 8: einen Materialzuschnitt für den Taschenkörper des Fördergutbehälters, in Draufsicht auf eine Innenseite;

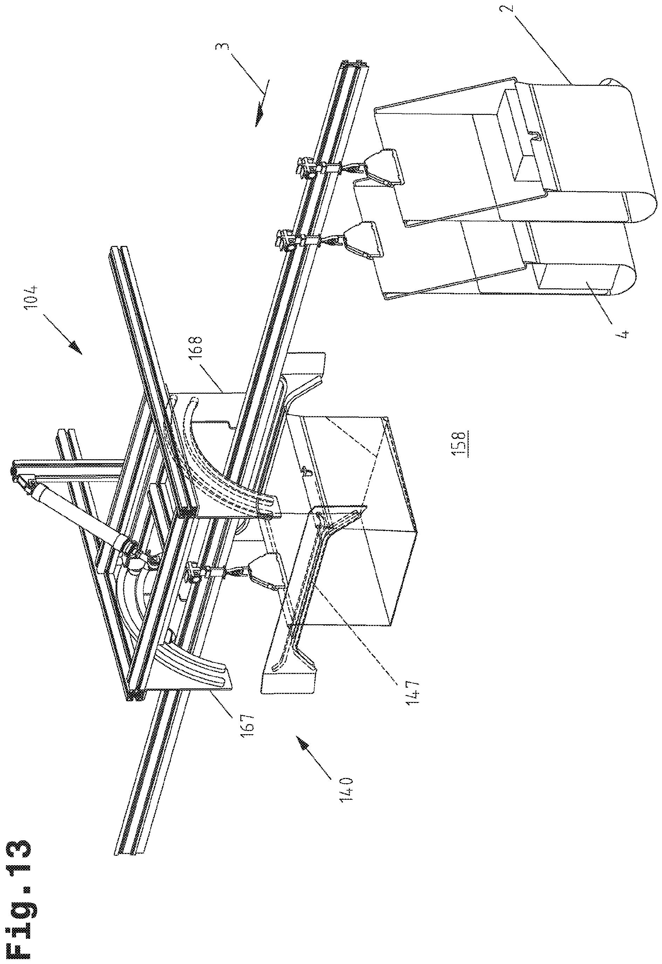

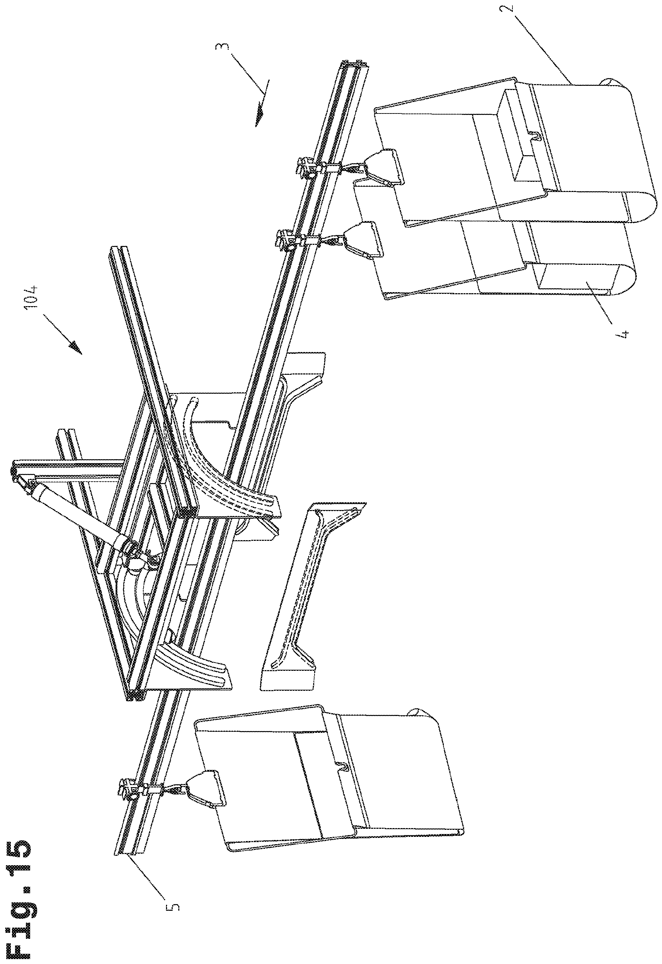

- Fig. 9 bis 15: eine Sequenzfolge von Verfahrensschritten für die automatische Entladung eines der Fördergutbehälter in einer automatischen Entladestation, in perspektivische Ansichten;
- Fig. 16a: eine Ansicht auf die Entladevorrichtung und einen schematisch dargestellten Fördergutbehälter gemäß Fig. 11, welcher Fördergutbehälter sich in einer Bereitstellposition befindet, teilweise geschnitten;
- Fig. 16b: eine Ansicht auf die Entladevorrichtung und einen schematisch dargestellten Fördergutbehälter gemäß Fig. 12, welcher Fördergutbehälter sich in einer Entladeposition befindet, teilweise geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

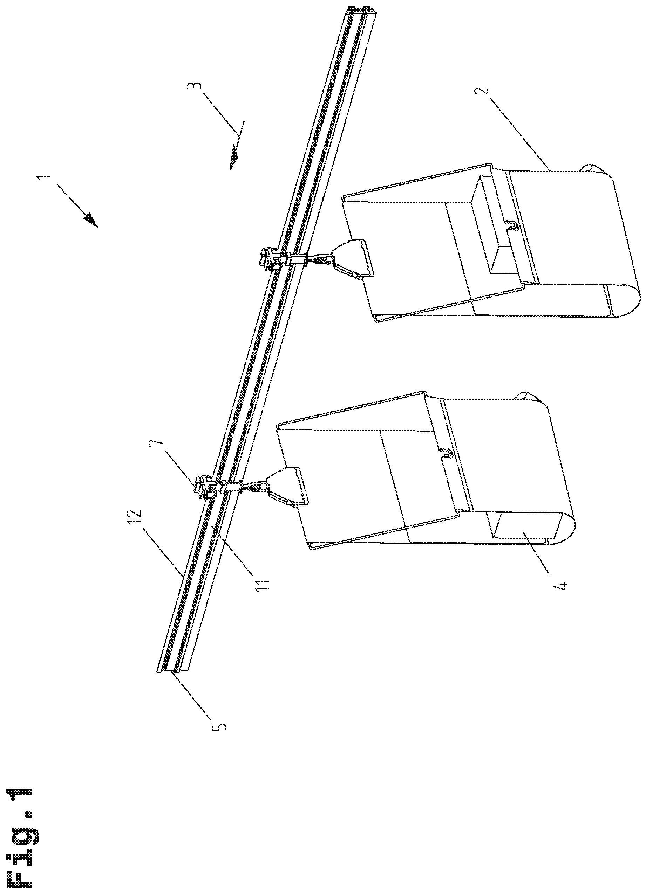

Fig. 1 zeigt einen Abschnitt eines Hängefördersystemes umfassend eine Hängefördervorrichtung 1 zum Transport von Fördergutbehältern 2 in einer Transportrichtung 3. Der Fördergutbehälter 2 ist als Transporttasche bzw. Hängetasche gestaltet. Der Fördergutbehälter 2 kann mit einem Fördergut 4 beladen werden. Vorzugsweise wird im Fördergutbehälter 2 ein einziges Fördergut 4 aufgenommen. Grundsätzlich kann auch mehr als ein Fördergut 4 im Fördergutbehälter 2 aufgenommen werden. Der Fördergutbehälter 2 kann verschiedene Fördergüter 4 transportieren, welche in der Geometrie / Abmessung variieren. Die Fördergüter 4 sind beispielweise Kartons, Folienbeutel (so genannte "Polybags" aus Polyethylen oder Polypropanol) und dgl. Solche Folienbeutel werden vorwiegend in der Textilindustrie verwendet und beispielsweise zur Verpackung von T-Shirts, Hemden und dergleichen eingesetzt.

Der Abschnitt des Hängefördersystemes in Fig. 1 zeigt die Hängefördervorrichtung 1 zum Antransport der Fördergutbehälter 2 in die Entladestation und Abtransport der Fördergutbehälter 2 aus der Entladestation.

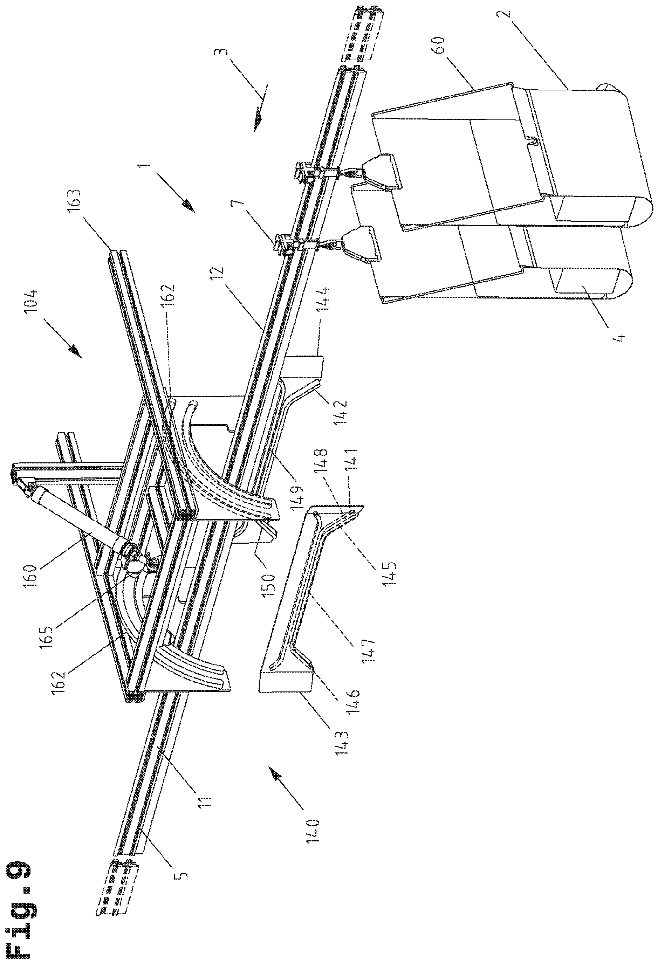

Das Hängefördersystem kann zusätzlich eine Entladestation 104 (siehe beispielweise Fig. 9) zum automatischen Entladen der Fördergutbehälter 2. Die Hängefördervorrichtung 1 dient zum Antransport der Fördergutbehälter 2 in die Entladestation und Abtransport der Fördergutbehälter 2 aus der Entladestation.

Das Hängefördersystem kann zusätzlich eine Beladestation zum automatischen Beladen eines Fördergutbehälters 2 umfassen, wie diese beispielweise in der WO 2018/130712A2 beschrieben ist. Hinsichtlich der verschiedenen Ausführungen der Beladestation zum automatischen Beladen eines Fördergutbehälters 2 wird auf die detaillierte Offenbarung in der

WO 2018/130712 A2 verwiesen. Grundsätzlich ist es auch denkbar, dass in der Beladestation ein Fördergutbehälter 2 manuell beladen wird. Die Hängefördervorrichtung 1 dient zum Antransport der Fördergutbehälter 2 in die Beladestation und Abtransport der Fördergutbehälter 2 aus der Beladestation.

Anderseits dient die Hängefördervorrichtung 1 zum Transport der Fördergutbehälter 2 zwischen der Beladestation zum manuellen oder automatischen Beladen eines Fördergutbehälters 2 und der Entladestation 104 zum automatischen Entladen eines Fördergutbehälters 2.

Die Hängefördervorrichtung 1 umfasst nach gezeigter Ausführung durch eine Antriebsvorrichtung 5 entlang der Hängefördervorrichtung 1 bewegbare Transportträger 7.

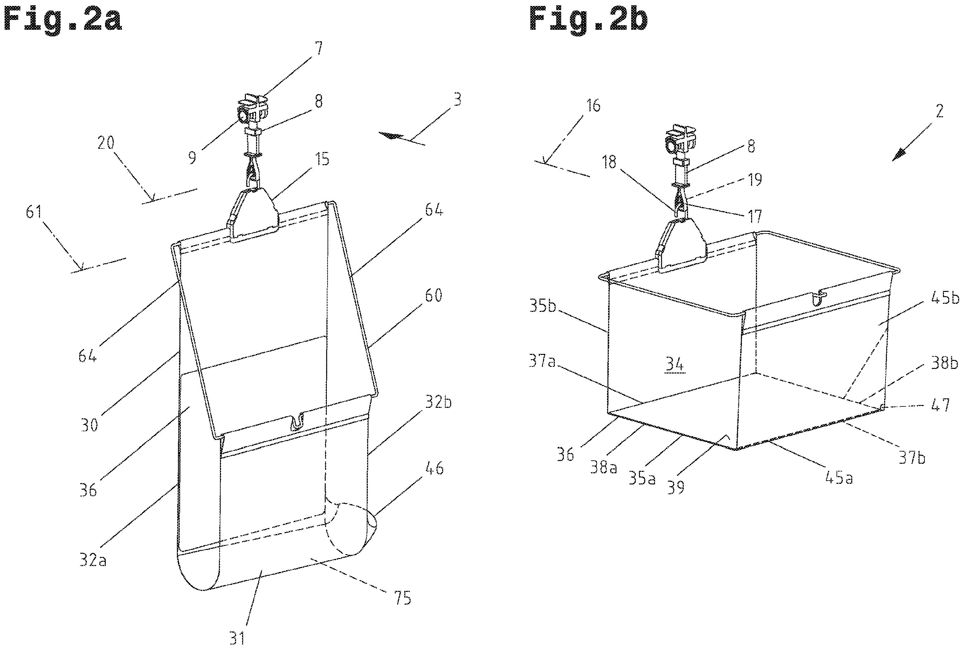

Im gezeigten Ausführungsbeispiel werden die Transportträger 7 durch einen Reibschlussantrieb (Antriebsvorrichtung 5) bewegt. Der beispielweise in Fig. 2a gezeigte Transportträger 7 umfasst einen Hängekörper 8, eine an einer Achse drehbar gelagerte (erste) Laufrolle 9 und eine Reibfläche 10, letztere mit einem endlos umlaufenden Reibband 11 der Hängefördervorrichtung 1 in Reibverbindung gebracht werden kann. Die in den Fig. gezeigte (zweite) Laufrolle 9 ist optional und dient der Führung des Transportträgers 7 an einer Schaltweiche. Der Transportträger 7 ist über die (erste) Laufrolle 9 an einer Profilschiene 12 der Hängefördervorrichtung 1 geführt und kann durch den Reibschlussantrieb in Transportrichtung 3 bewegt werden. Ein derartiger Transportträger 7 ist beispielweise in der DE 10 2011 080 280 A1 beschrieben, wobei sich die gezeigte Ausführung von dem Transportträger in der DE 10 2011 080 280 A1 dadurch unterscheidet, dass der Hängekörper 8 eine Schwenkaufnahme umfasst.

Nach einer nicht gezeigten Ausführung können die Transportträger 7 durch einen Formschlussantrieb (Antriebsvorrichtung 5) bewegt werden. Hierzu kann ein endlos umlaufendes Antriebsband der Hängefördervorrichtung 1 mit an diesem vorspringenden Mitnehmerelementen versehen werden, die mit den Transportträgern 7 formschlüssig in Eingriff gelangen.

Auch eine Kombination aus einem Reibschlussantrieb und Formschlussantrieb ist möglich.

Die beschriebenen Antriebsvorrichtungen 5 sind keineswegs einschränkend zu verstehen, sondem zeigen lediglich unterschiedliche Möglichkeiten, wie eine Antriebskraft auf die Transportträger 7 übertragen wird, um diese an der Hängefördervorrichtung 1 in Transportrichtung 3 (angetrieben) zu bewegen.

Es ist auch eine Ausführung denkbar, bei der die Transportträger 7 eine Antriebsvorrichtung aufweisen und an der Hängefördervorrichtung 1 in Transportrichtung 3 (angetrieben) bewegt werden.

Unabhängig davon, wäre auch eine Transportbewegung der Transportträger 7 ohne einer Antriebsvorrichtung möglich, indem die Transportträger 7 durch Schwerkraft an der Hängefördervorrichtung 1 in Transportrichtung 3 (nicht angetrieben) bewegt werden.

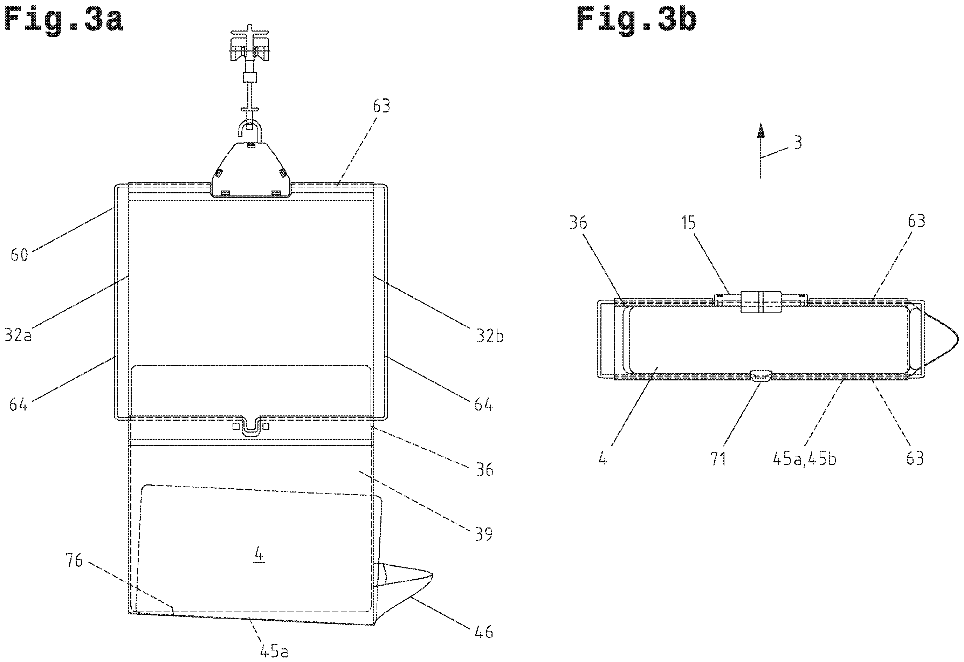

Die Fig. 2a, 2b, 3a und 3b zeigen den Fördergutbehälter 2 (Hängetasche) mit einer ersten Ausführung eines Taschenkörpers. Fig. 2a zeigt die Transportstellung und Fig. 2b eine Öffnungsstellung, welche die Beladestellung betrifft, wenn der Fördergutbehälter 2 beladen werden soll, oder die Entladestellung, wenn der Fördergutbehälter 2 entladen werden soll.

Der Fördergutbehälter 2 (Hängetasche) umfasst erfindungsgemäß einen Hängeträger 15, wobei der Hängeträger 15 und der Transportträger 7 vorzugsweise über eine Gelenkverbindung derart gelenkig miteinander gekoppelt sind, dass der Hängeträger 15 um eine im Wesentlichen parallel zur Hängefördervorrichtung 1 (bzw. im Wesentlichen parallel zur Transportrichtung 3) verlaufende Achse 16 relativ zum Transportträger 7 schwenkbar ist.

Der Transportträger 7 kann mit einem ersten Kupplungselement 17 und der Hängeträger 15 mit einem zweiten Kupplungselement 18 versehen werden, wobei das erste Kupplungselement 17 und zweite Kupplungselement 18 koppelbar sind und die Gelenkverbindung bilden. Das erste Kupplungselement 17 umfasst eine Schwenkaufnahme 19 und das zweite Kupplungselement 18 umfasst eine Schwenklagerachse 20. Die Schwenklagerachse 20 ist an einem Haken ausgebildet.

Nach einer anderen nicht gezeigten Ausführung umfasst die Gelenkverbindung zwischen dem Hängeträger 15 und Transportträger 7 einen elastischen Körper, insbesondere aus Elastomermaterial, welcher einerseits mit dem Hängeträger 15 und andererseits mit dem Transportträger 7 verbunden ist. Der Hängeträger 15 und Transportträger 7 sind über den elastischen Körper (die elastische Gelenkverbindung) bevorzugt dauerhaft bzw. unlösbar miteinander verbunden.

Der gezeigte Fördergutbehälter 2 zum Transportieren eines Fördergutes 4 eignet sich besonders gut zur automatischen Entladung an der nachfolgend zu beschreibenden Entladestation 104.

Der Fördergutbehälter 2 umfasst einen zwischen einer Transportstellung (Fig. 2a) und einer Belade- und/oder Endladestellung (Fig. 2b) umstellbaren Taschenkörper.

Der Taschenkörper umfasst
- eine Vorderwand 30 und eine Hinterwand 31,
- einen ersten Seitenrand 32a und einen zweiten Seitenrand 32b entlang der Vorderwand 30 und Hinterwand 31,
- eine an einer ersten Seite des Taschenkörpers zumindest bereichsweise zwischen der Vorder- und Hinterwand 30, 31 ausgebildete Belade- und/oder Endladeöffnung 34,
- einen an einer zweiten Seite des Taschenkörpers zumindest bereichsweise zwischen der Vorder- und Hinterwand 30, 31 ausgebildeten Seitenwandanschlag 35, gegen welche das Fördergut 4 anlegbar ist (siehe Fig.3a), und
- einen Aufbewahrungsraum zur Aufbewahrung des Fördergutes 4 zwischen der Vorderund Hinterwand 30, 31.

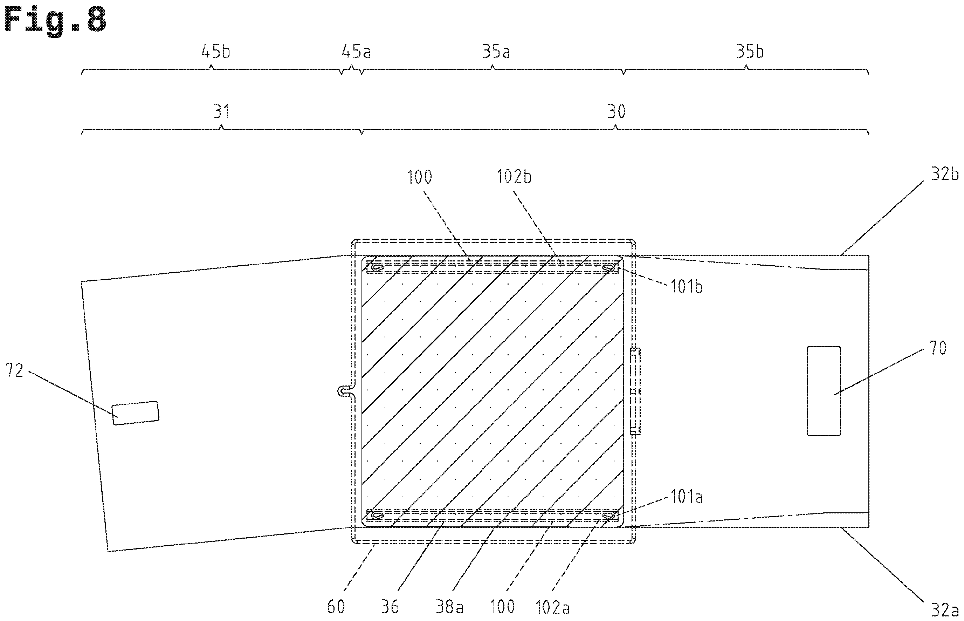

Die Vorderwand 30 und Hinterwand 31 sind in einer bevorzugten Ausführungsform aus einer durchgehenden Textilbahn, Folienbahn, ein Geflecht, ein Gewirke, ein Gewebe oder dergleichen zugeschnitten. Ein Materialzuschnitt, insbesondere der Textilzuschnitt ist in Fig. 8 gezeigt.

Die Vorderwand 30 und Hinterwand 31 müssen nicht gesondert miteinander verwebt, vernäht, verklebt oder anderweitig miteinander verbunden werden. Dadurch werden ein weiterer Schritt in der Herstellung des Taschenkörpers und somit Herstellungskosten des Fördergutbehälters 2 eingespart.

Die Erfindung ist aber nicht darauf beschränkt, sondern kann allenfalls die Vorderwand 30 und Hinterwand 31 auch jeweils einstückig ausgebildet werden. Beispielsweise sind die Vorderwand 30 und Hinterwand 31 jeweils separat aus einem Textil, einer Folie oder dergleichen ausgebildet, wobei die Vorderwand 30 und Hinterwand 31 direkt miteinander verwebt, verknüpft, vernäht, verklebt oder anderweitig miteinander verbunden sind. Die Vorderwand 30 und Hinterwand 31 gehen kontinuierlich ineinander über.

Die Vorderwand 30 umfasst einen ersten Vorderwandabschnitt 35a, einen zweiten Vorderwandabschnitt 35b und eine Bodenplatte 36. Die Bodenplatte 36 ist im ersten Vorderwandabschnitt 35a vorgesehen. Insbesondere umfasst der erste Vorderwandabschnitt 35a die Bodenplatte 36 und/oder bildet der erste Vorderwandabschnitt 35a die Bodenplatte 36 aus.

Bevorzugt ist die Bodenplatte 36 (nach einer gezeigten ersten Ausführung) separat vom Taschenkörper hergestellt und wird im ersten Vorderwandabschnitt 35a angeordnet und mit der Vorderwand 30 verbunden, insbesondere vernäht oder verklebt. Eine solche Bodenplatte 36 wird bevorzugt innenliegend im Taschenkörper im ersten Vorderwandabschnitt 35a angeordnet. Eine solche Bodenplatte 36 ist beispielweise aus Kunststoff hergestellt und weist eine Dicke von maximal 2 mm. In der Praxis hat sich gezeigt, dass selbst bei einer minimalen Dicke von 1 mm eine ausreichende Formstabilität gegeben ist und das Beladen und/oder Entladen an einer automatischen Beladevorrichtung und/oder Entladevorrichtung sehr zuverlässig erfolgen kann.

Alternativ kann (nach einer nicht gezeigten zweiten Ausführung) der erste Vorderwandabschnitt 35a an sich die Bodenplatte 36 ausbilden. Beispielweise ist der erste Vorderwandabschnitt 35a gegenüber dem zweiten Vorderwandabschnitt 35b mit einer größeren Materialdicke oder höheren Materialdichte gestaltet. Nach diesen Maßnahmen werden vom Ausgangsmaterial (Textil oder Folie) für die Vorderwand 30 mehrere Materiallagen übereinander gelegt und einige der Materiallagen (zumindest die äußeren Materiallagen, sofern das Ausgangsmaterial in mehr als zwei Lagen übereinander gelegt wird) miteinander verbunden, insbesondere vernäht oder verklebt, um schließlich die Bodenplatte 36 zu bilden, oder es wird das Ausgangsmaterial (Textil) für die Vorderwand 30 im ersten Vorderwandabschnitt 35a engmaschig gewebt, um schließlich die Bodenplatte 36 zu bilden. Beispielweise kann das Ausgangsmaterial (textiles Trägermaterial) für die Vorderwand 30 aber auch mit einer Kunststoffbeschichtung im ersten Vorderwandabschnitt 35a versehen sein, um schließlich die Bodenplatte 36 zu bilden.

Sowohl nach der ersten Ausführung als auch der zweiten Ausführung führt die Bodenplatte 36 (bzw. kann man auch von einer "Bodenstruktur" sprechen) insgesamt dazu, dass die Vorderwand 30 im ersten Vorderwandabschnitt 35a mit einer höheren Steifigkeit bzw. Formstabilität ausgebildet ist als im zweiten Vorderwandabschnitt 35b. Mit anderen Worten ist der erste Vorderwandabschnitt 35a gegenüber dem zweiten Vorderwandabschnitt 35b steifer bzw. formstabiler gestaltet.

Schließlich ist auch eine Kombination der vorgenannten Ausführungen möglich, um die gewünschte relative Steifigkeit des ersten Vorderwandabschnittes 35a gegenüber dem zweiten Vorderwandabschnitt 35b zu erreichen.

Die Bodenplatte 36 bzw. "Bodenstruktur" ist formstabil, daher die Bodenplatte 36 bzw. "Bodenstruktur" verformt sich unter Krafteinwirkung (Gewichtskraft des Fördergutes 4, wenn es auf der Bodenplatte 36 bzw. "Bodenstruktur" aufliegt) wenig bis gar nicht. Die Bodenplatte 36 (Bodenstruktur) ist quadratisch gestaltet. Grundsätzlich kann diese auch rechteckförmig sein.

Wie in Fig. 2b eingetragen, umfasst die Bodenplatte 36 (Bodenstruktur)
- eine erste Längskante 37a,
- eine zur ersten Längskante 37a mit einem Abstand verlaufende zweite Längskante 37b,
- eine zwischen der ersten Längskante 37a und der zweiten Längskante 37b verlaufende erste Stirnkante 38a,
- eine zwischen der ersten Längskante 37a und der zweiten Längskante 37b verlaufende zweite Stirnkante 38b, und
- eine Stütz- und Auflagefläche 39, welche dem Aufbewahrungsraum zugewandt ist.

Die Bodenplatte 36 (Bodenstruktur) grenzt mit der ersten Stirnkante 38a im Wesentlichen an den ersten Seitenrand 32a und mit der zweiten Stirnkante 38b im Wesentlichen an den zweiten Seitenrand 32b an.

Der zweite Vorderwandabschnitt 35b schließt an die erste Längskante 37a an und der erste Hinterwandabschnitt 45a schließt an die zweite Längskante 37b an.

Es ist auch von Vorteil, wenn die erste Längskante 37a eine erste Faltkante und die zweite Längskante 37b eine zweite Faltkante ausbilden. Die Faltkanten fungieren als Materialscharniere, an denen der zweite Vorderwandabschnitt 35b und erste Hinterwandabschnitt 45a (gemäß der Ausführung nach den Fig. 2a, 2b, 3a und 3b) angelenkt ist, und erlauben eine Relativverlagerung zwischen der Vorderwand 30 und Hinterwand 31.

Die Stütz- und Auflagefläche 39 hat eine Doppelfunktion. Zum Einen kann die Bodenplatte 36 (Bodenstruktur) zur Stützung des Fördergutes 4 dienen, wenn der Taschenkörper in die Transportstellung umgestellt ist und das Fördergut 4 zwischen der Vorderwand 30 und Hinterwand 31 klemmend gehalten wird. Zum Anderen kann die Bodenplatte 36 (Bodenstruktur) zur Auflage des Fördergutes 4 dienen, wenn der Taschenkörper in die Belade- und/oder Endladestellung umgestellt ist und der Fördergutbehälter 2 beladen oder entladen wird.

Es erweist sich auch von Vorteil, wenn die Stütz- und Auflagefläche 39 der Bodenplatte 36 (Bodenstruktur) in die Belade- und/oder Endladeöffnung 34 mündet. Die Bodenplatte 36 (Bodenstruktur) kann auch als "Rutsche" dienen, wenn der Taschenkörper in die Endladestellung umgestellt ist, wie später noch beschrieben wird. Wird die Stütz- und Auflagefläche 39 als Gleitfläche gestaltet, kann insbesondere das (automatische) Entladen des Fördergutes 4 begünstigt werden.

Die Hinterwand 31 umfasst einen ersten Hinterwandabschnitt 45a und einen zweiten Hinterwandabschnitt 45b. Der erste Hinterwandabschnitt 45a schließt an den ersten Vorderwandabschnitt 35a an, letzterer mit der Bodenplatte 36 (Bodenstruktur) versehen ist.

Die Hinterwand 31 ist im ersten Hinterwandabschnitt 45a mit einer niedrigeren Steifigkeit bzw. Formstabilität ausgebildet als im ersten Vorderwandabschnitt 35a. Mit anderen Worten ist der erste Vorderwandabschnitt 35a gegenüber dem ersten Hinterwandabschnitt 45a steifer bzw. formstabiler gestaltet.

Wie oben beschrieben, ist die Vorderwand 30 und Hinterwand 31 aus biegeschlaffem Material, insbesondere einem Textilmaterial und ist ausschließlich der erste Vorderwandabschnitt 35a durch die Bodenplatte 36 (Bodenstruktur) versteift / verstärkt gestaltet. Das biegeschlaffe Material ist vorzugsweise anschmiegsam und kann gegebenenfalls elastische Eigenschaften aufweisen. Dadurch kann das Fördergut 4 zumindest bereichsweise, beispielsweise an Ecken und Kanten, enganliegend von dem biegeschlaffen Material umgeben sein. Dadurch kann ein Form- und/oder Kraftschluss zum Halten des Fördergutes 4 innerhalb des Fördergutbehälters 2 bewirkt werden.

Der zweite Vorderwandabschnitt 35b, erste Hinterwandabschnitt 45a und zweite Hinterwandabschnitt 45b sind aus dem biegeschlaffen Material, insbesondere einem Textilmaterial hergestellt. Eine zusätzliche Versteifung des biegeschlaffen Materials ist nicht erforderlich und auch nicht vorgesehen.

Wie in Fig. 2a ersichtlich, sind in der Transportstellung die Vorderwand 30 und Hinterwand 31 aneinander angenähert. In der Transportstellung ist der Horizontalabstand geringer als der entsprechende Horizontalabstand in der Belade- und/oder Endladestellung. Der Horizontalabstand wird auf ein Minimum reduziert und resultiert aus der Geometrie / Abmessung des Fördergutes 4, welches zum Transport im Aufbewahrungsraum aufgenommen wird. Der Aufbewahrungsraum ist in der Transportstellung des Taschenkörpers volumenminimiert. Zweckmäßigerweise ist in der Transportstellung die Stütz- und Auflagefläche 39 im Wesentlichen vertikal ausgerichtet. Das Fördergut 4 wird zwischen der Vorderwand 30 und Hinterwand 31 im Aufbewahrungsraum aufgenommen. Wie in den Fig. 3a, 3b ersichtlich, wird in der Transportstellung des Taschenkörpers das Fördergut 4 durch die Bodenplatte 36 (Bodenstruktur) und den zweiten Hinterwandabschnitt 45b bevorzugt klemmend gehalten. Zusätzlich liegt das Fördergut 4 auf dem ersten Hinterwandabschnitt 45a bzw. der nachfolgend beschriebenen Transportauflage auf.

Wie in der Fig. 2b ersichtlich, sind in einer der Öffnungsstellungen des Taschenkörpers, welche die Beladestellung betrifft, wenn der Fördergutbehälter 2 beladen werden soll, oder die Entladestellung, wenn der Fördergutbehälter 2 entladen werden soll (Belade- und/oder Endladestellung) die Vorderwand 30 und Hinterwand 31 voneinander wegbewegt und die Beladeund/oder Endladeöffnung 34 ist durch die Vorderwand 30 und Hinterwand 31 begrenzt und grenzt an die erste Stirnkante 38a der Bodenplatte 36 (Bodenstruktur) an. In der Beladeund/oder Endladestellung ist der Horizontalabstand größer als der entsprechende Horizontalabstand in der Transportstellung. Der Horizontalabstand wird bevorzugt auf ein Maximum vergrößert, um das Fördergut 4 zuverlässig aus dem Aufbewahrungsraum zu entladen und/oder den Fördergutbehälter 2 zuverlässig zu beladen. Insbesondere umfasst der Taschenkörper eine durch den ersten Seitenrand 32a begrenzte und zumindest bereichsweise zwischen der Vorder- und Hinterwand 30, 31 ausgebildete Belade- und/oder Endladeöffnung 34.

Zwar ist es vorgesehen, dass die Belade- und/oder Entladeöffnung 34 an die erste Stirnkante 38a angrenzt, dies schließt jedoch nicht aus, dass sich zwischen der Vorderwand 30 und Hinterwand 31 oberhalb der Belade- und/oder Entladeöffnung 34 eine Seitenwand erstreckt. Es ist lediglich darauf zu achten, dass die Belade- und/oder Entladeöffnung 34 so dimensioniert ist, dass das größte Fördergut 4 ohne Kollision mit der Seitenwand durch die Belade- und/oder Entladeöffnung 34 hindurch bewegt werden kann.

In der Belade- und/oder Endladestellung ist der Aufbewahrungsraum volumenmaximiert. Zweckmäßigerweise ist in der Beladestellung die Stütz- und Auflagefläche 39 im Wesentlichen horizontal ausgerichtet. Dadurch kann der Beladevorgang auf einfache Weise durchgeführt werden. Bevorzugt wird unabhängig von der Geometrie / Abmessung des Fördergutes 4 der Taschenkörper stets in dieselbe Öffnungsstellung umgestellt, was einen besonders einfachen Aufbau der nachfolgend beschriebenen Entladestation ermöglicht.

Der Fördergutbehälter 2 kann in einer bevorzugten Ausführung über die Belade- und/oder Endladeöffnung 34 mit einem Fördergut 4 (manuell oder automatisch) beladen werden. Andererseits kann ein Fördergut 4, welches nach dem Umstellen des Taschenkörpers auf der Stützund Auflagefläche 39 auflastet, über die Belade- und/oder Endladeöffnung 34 (manuell oder automatisch) entladen werden.

Wie in den Fig. 2a, 2b, 3a, 3b gut erkennbar, umfasst der Taschenkörper an seiner zweiten Seite einen zumindest bereichsweise zwischen der Vorder- und Hinterwand 30, 31 ausgebildeten Seitenwandanschlag 46, gegen welche das Fördergut 4 anlegbar ist. Konkret umfasst der Taschenkörper einen an den zweiten Seitenrand 32b angrenzenden und zumindest bereichsweise zwischen der Vorder- und Hinterwand 30, 31 ausgebildeten Seitenwandanschlag 46, gegen welche das Fördergut 4 anlegbar ist. Bevorzugt umfasst der Taschenkörper ausschließlich diesen (einzigen) Seitenwandanschlag 46.

Der (aufgespannte) Seitenwandanschlag 46 ist vorliegend dreieckig ausgebildet und schließt sich an den ersten Vorderwandabschnitt 35a, ersten Hinterwandabschnitt 45a und zweiten Hinterwandabschnitt 45b an. Bevorzugt erstreckt sich der Seitenwandanschlag 46 in etwa bis zur Hälfte, bevorzugt in etwa bis zu einem Drittel des ersten Vorderwandabschnittes 35a und vom ersten Vorderwandabschnitt 35a verjüngend vertikal nach oben bis in etwa zur Hälfte des zweiten Hinterwandabschnittes 45b.

Alternativ ist es auch denkbar, dass der Seitenwandanschlag 46 rechteckig ausgebildet ist und an den ersten Vorderwandabschnitt 35a, zweiten Vorderwandabschnitt 35b, ersten Hinterwandabschnitt 45a und zweiten Hinterwandabschnitt 45b anschließt.

Ein solcher Seitenwandanschlag 46 wird vornehmlich aus einer gesonderten Materialbahn ausgeschnitten und an der zumindest einen Materialbahn für die Vorderwand 30 und Hinterwand 31 angefügt, insbesondere an der Vorderwand 30 und Hinterwand 31 angenäht.

Wie ausschließlich in Fig. 2b eingetragen, kann der Seitenwandanschlag 46 einen Materialausschnitt 47 ausbilden, welcher im Bereich des ersten Hinterwandabschnittes 45a angeordnet ist. Der Materialausschnitt 47 erfüllt den Zweck, dass im Taschenkörper ansammelnde Flüssigkeit aus dem Fördergutbehälter 2 abfließen kann.

Erfindungsgemäß umfasst der Fördergutbehälter 2 den Hängeträger 15 zum hängenden Transport an der Hängefördervorrichtung 1 (siehe Fig. 1) und ein Rahmengestell 60, über das der Taschenkörper an dem Hängeträger 15 hängt und durch welches der Taschenkörper zwischen der Transportstellung und der Belade- und/oder Endladestellung umstellbar ist. Durch verschiedene Schrägstellungen des Rahmengestelles 60 kann ein Horizontalabstand zwischen der Vorderwand 30 und Hinterwand 41 verändert werden.

Es sei an dieser Stelle auch hingewiesen, dass die Beladung des Fördergutbehälters 2 alternativ zu der oben beschriebenen Ausführung auch durch das Rahmengestell 60 hindurch und von oben erfolgen kann, wenn der Taschenkörper in die Belade- und/oder Endladestellung umgestellt ist. Nach dieser Ausgestaltung bildet das Rahmengestell 60 die Beladeöffnung. Das Entladen des Fördergutbehälters 2 erfolgt aber nach wie vor über die Entladeöffnung 34. Mit anderen Worten ist es nicht zwingenderweise notwendig, dass der Taschenkörper an der ersten Seite die Beladeöffnung 34 zum Beladen des Fördergutbehälters 2 als auch die Endladeöffnung 34 zum Entladen des Fördergutbehälters 2 (daher eine gemeinsame Belade- und Endladeöffnung 34) ausbildet, sondern bloß die Endladeöffnung 34.

Das Rahmengestell 60 ist am und relativ zum Hängeträger 15 um eine bevorzugt im Wesentlichen horizontal ausgerichtete Achse 61 schwenkbar gelagert. Die Achse 61 ist bevorzugt näher an der Vorderwand 30 als an der Hinterwand 31 angeordnet.

Das Rahmengestell 60 bildet mit gegenseitigem Abstand parallel verlaufende Querstreben 63 und zwischen den Querstreben 63 mit gegenseitigem Abstand parallel verlaufende Längsstreben 64 aus. Das Rahmengestell 60 bildet eine im Wesentlichen rechteckförmige oder eine im Wesentlichen quadratische Außenkontur aus. Bevorzugt wird als Rahmengestell 60 ein Drahtrahmen verwendet.

Wie in den Fig. 2a, 2b, 3a, 3b ersichtlich, ist die Vorderwand 30 mit dem zweiten Vorderwandabschnitt 35b an einer vorderen Querstrebe 63 gelenkig angebracht (erstes Schwenklager) und die Hinterwand 31 mit dem zweiten Hinterwandabschnitt 45b an einer hinteren Querstrebe 63 gelenkig angebracht (zweites Schwenklager). Der erste Vorderwandabschnitt 35a ist demnach entfernt zur vorderen Querstrebe angeordnet und der erste Hinterwandabschnitt 45a ist demnach entfernt zur hinteren Querstrebe angeordnet.

Der zweite Vorderwandabschnitt 35b bildet eine durch Umklappen des Materialendbereiches gebildete Schlaufe aus, durch welche die vordere Querstrebe hindurchgeführt ist. Der zweite Hinterwandabschnitt 45b bildet eine durch Umklappen des Materialendbereiches gebildete Schlaufe aus, durch welche die hintere Querstrebe hindurchgeführt ist.

Es ist ersichtlich, dass mittels des ersten Schwenklagers, zweiten Schwenklagers, der ersten Längskante 37a (erste Faltkante) und zweiten Längskante 37b (zweite Faltkante) ein Viergelenk gebildet wird, wodurch der Taschenkörper besonders einfach zwischen der Transportstellung und Belade- und/oder Endladestellung umgestellt werden kann.

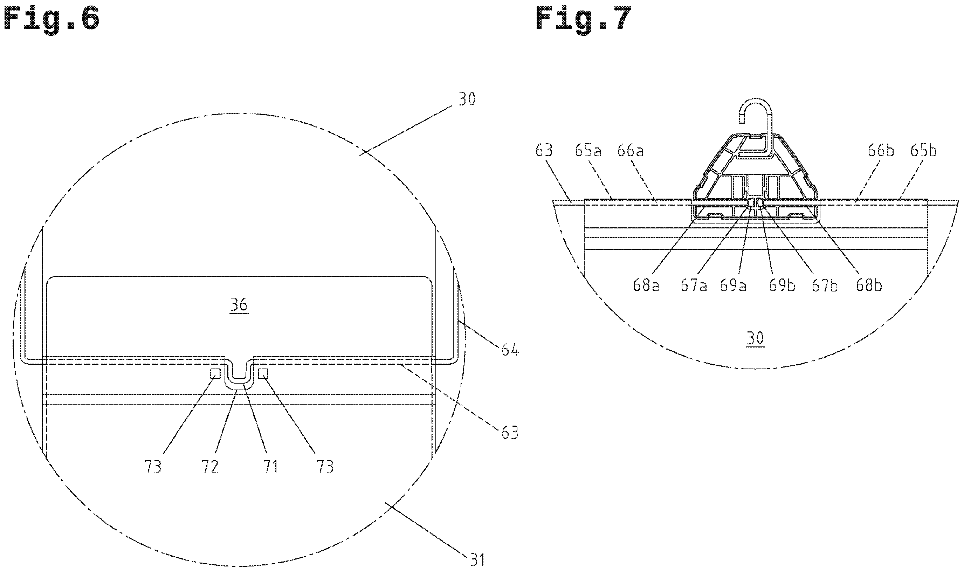

Es kann auch vorsehen sein, wie in Fig. 7 näher dargestellt, dass die vordere Querstrebe 63 einen ersten Strebenabschnitt 65a und einen zweiten Strebenabschnitt 65b umfasst, welche voneinander getrennt jeweils an den Längsstreben 64 rechtwinkelig vorragen und aufeinander zulaufen. Insbesondere sind der erste Strebenabschnitt 65a und zweite Strebenabschnitt 65b koaxial angeordnet.

Der erste Strebenabschnitt 65a umfasst einen zylindrischen Strebenschaft 66a und an seinem freien Ende einen ersten Strebenkopf 67a. Der Strebenkopf 67a ragt in radialer Richtung an einer Außenkontur des zylindrischen Strebenschaftes 66a vor und ist bevorzugt einstückig mit dem Strebenschaft 66a hergestellt. Der Strebenkopf 67a ist beispielweise durch eine Materialaufstauchung gebildet.

Der zweite Strebenabschnitt 65b umfasst einen zylindrischen Strebenschaft 66b und an seinem freien Ende einen zweiten Strebenkopf 67b. Der Strebenkopf 67b ragt in radialer Richtung an einer Außenkontur des zylindrischen Strebenschaftes 66b vor und ist bevorzugt einstückig mit dem Strebenschaft 66b hergestellt. Der Strebenkopf 67b ist beispielweise durch eine Materialaufstauchung gebildet.

Der Hängeträger 15 umfasst nach diesem Ausführungsbeispiel einen ersten Lagerabschnitt 68a, eine erste Strebenkopfaufnahme 69a, einen zweiten Lagerabschnitt 66b und eine zweite Strebenkopfaufnahme 69b. Der Hängeträger 15 kann eine erste Hängeträgerhälfte und zweite Hängeträgerhälfte umfassen, welche bevorzugt dauerhaft miteinander verbunden sind. Beispielweise sind die erste Hängeträgerhälfte und zweite Hängeträgerhälfte über formschlüssig und/oder kraftschlüssig zusammenwirkende Kupplungselemente oder über eine stoffschlüssige Verbindung miteinander verbunden.

Ist der Hängeträger 15 aus der ersten Hängeträgerhälfte und zweiten Hängeträgerhälfte zusammengesetzt, so sind der erste Lagerabschnitt 68a, die erste Strebenkopfaufnahme 69a, der zweite Lagerabschnitt 66b und die zweite Strebenkopfaufnahme 69b zu einer Teilungsebene spiegelsymmetrisch ausgebildet und durch die Teilungsebene geteilt. Der erste Lagerabschnitt 68a wird demnach je zur Hälfte an der ersten Hängeträgerhälfte und zweiten Hängeträgerhälfte ausgebildet. Sind die erste Hängeträgerhälfte und zweite Hängeträgerhälfte zum Hängeträger 15 verbunden, bildet eine erste Lagerabschnitthälfte und zweite Lagerabschnitthälfte den ersten Lagerabschnitt 68a. Demnach wird die Teilungsebene des Hängeträgers 15 so gelegt, dass der erste Lagerabschnitt 68a durch die Teilungsebene mittig geteilt wird. Gleiches ist auf die erste Strebenkopfaufnahme 69a, den zweiten Lagerabschnitt 66b und die zweite Strebenkopfaufnahme 69b zu übertragen.

Der erste Lagerabschnitt 68a und zweite Lagerabschnitt 68b sind koaxial angeordnet und weisen die (gemeinsame) Achse 61 auf. Der erste Strebenschaft 66a und erste Lagerabschnitt 68a sind koaxial angeordnet. Der zweite Strebenschaft 66b und zweite Lagerabschnitt 68b sind koaxial angeordnet.

Der erste Strebenkopf 67a ist innerhalb der ersten Strebenkopfaufnahme 69a angeordnet, um den gegenüber dem ersten Lagerabschnitt 68a und der ersten Strebenkopfaufnahme 69a schwenkbaren ersten Strebenabschnitt 65a in axialer Richtung positioniert zu halten.

Der zweite Strebenkopf 67b ist innerhalb der zweite Strebenkopfaufnahme 69b angeordnet, um den gegenüber dem zweiten Lagerabschnitt 68b und der zweiten Strebenkopfaufnahme 69b schwenkbaren zweiten Strebenabschnitt 65b in axialer Richtung positioniert zu halten.

Es sei darauf hingewiesen, dass die Erfindung keineswegs auf diese vorteilhafte Ausgestaltung des Rahmengestelles 60 eingeschränkt zu verstehen ist. Vielmehr kann das Rahmengestell 60 einen (umlaufenden) geschlossenen Rahmen umfassen bzw. ausbilden. Anderenfalls kann das Rahmengestell 60 auch nach den verschiedenen Ausführungen, wie in der DE 10 2004 018 569 A1 beschrieben, gestaltet werden.

Unabhängig davon wie der Hängeträger 15 und das Rahmengestell 60 ausgestaltet sind, ist es nach dieser Ausführung vorgesehen, dass das Rahmengestell 60 mit der vorderen Querstrebe 63 am und relativ zum Hängeträger 15 um die horizontal ausgerichtete Achse 61 schwenkbar ist, sodass der Taschenkörper zwischen der Transportstellung und der Belade- und/oder Endladestellung umstellbar ist.

Wie in den Fig. 7 und 8 eingetragen, bildet die Vorderwand 30 am zweiten Vorderwandabschnitt 35b einen Materialausschnitt 70 aus, welcher von dem Hängeträger 15 durchragt wird. Dadurch wird eine unerwünschte Verlagerung der Vorderwand 30 relativ gegenüber dem Rahmengestell 60 begrenzt oder vermieden und eine Zentrierung der Vorderwand 30 relativ gegenüber dem Rahmengestell 60 erreicht.

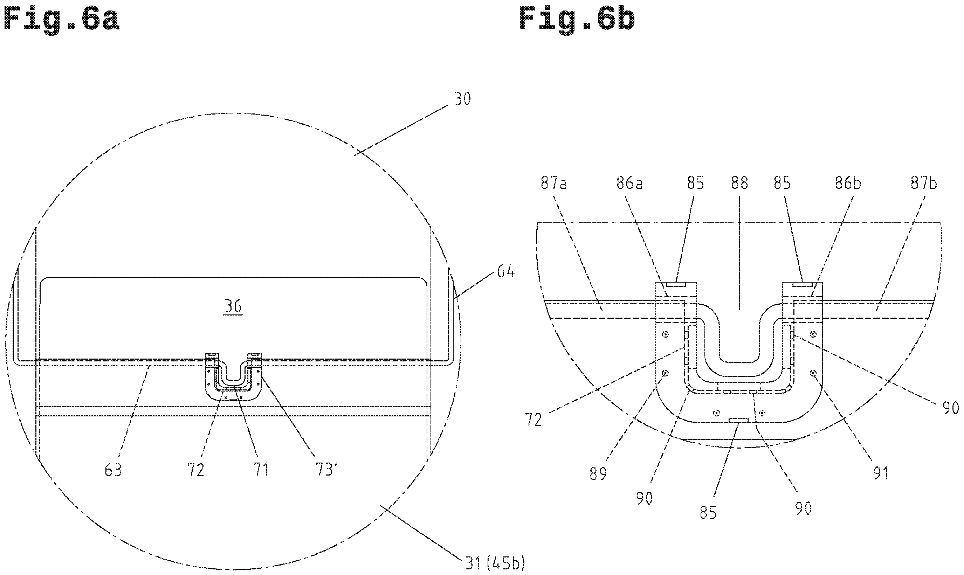

Wie in den Fig. 6 und 8 eingetragen, ist die hintere Querstrebe 63 mit einem Positioniermittel versehen. Bevorzugt ist das Positioniermittel etwa mittig zwischen den Längsstreben 64 angeordnet. Das Positioniermittel ist beispielweise eine Ausformung 71, welche bevorzugt U-förmig gestaltet ist. Anstatt der Ausformung 71 kann als Positioniermittel auch ein Anschlagkörper an der hinteren Querstrebe 63 vorgesehen werden, welches mit der hinteren Querstrebe 63 fest verbunden ist. Der Anschlagkörper ist beispielweise eine Kunststoffscheibe. Die Hinterwand 31 bildet am zweiten Hinterwandabschnitt 45b einen Materialausschnitt 72, welcher von dem Positioniermittel (konkret der Ausformung 71) durchragt wird. Durch das Positioniermittel wird eine unerwünschte Verlagerung der Hinterwand 31 relativ gegenüber dem Rahmengestell 60 begrenzt oder vermieden und eine Zentrierung der Hinterwand 31 relativ gegenüber dem Rahmengestell 60 erreicht.

Es hat sich auch von Vorteil erwiesen, wenn der zweite Hinterwandabschnitt 45b in dem das Positioniermittel umgrenzenden und an den Materialausschnitt 72 angrenzenden Randbereich abschnittsweise oder umfänglich mit zumindest einem Verstärkungsanschlag 73 versehen ist. Bevorzugt ist der Verstärkungsanschlag 73 durch eine Schweißnaht, Klebernaht oder Nieten und dergleichen gebildet. Wie in ausschließlich in den Fig. 3a und 6 eingetragen, ist im genannten Randbereich beidseits der insbesondere U-förmig gestalteten Ausformung 71 jeweils eine Schweißnaht vorgesehen. Durch die Schweißnähte wird das Material steifer und verstärken im genannten Randbereich das Material. Die Schweißnähte sind beispielweise Liniennähte oder Punktnähte und bilden damit Verstärkungsanschläge 73. Anderenfalls könnte im genannten Randbereich auch nur eine durchgehende Schweißnaht vorgesehen werden, welche im Wesentlichen U-förmig gestaltet und an die Außenkontur der insbesondere U-förmig gestalteten Ausformung 71 angepasst ist.

Kann eine Verlagerung der Hinterwand 31 relativ gegenüber dem Rahmengestell 60 kaum vermieden werden, so wird die Verlagerung durch das Positioniermittel jedenfalls begrenzt. Dies kann beispielweise der Fall sein, wenn der Fördergutbehälter 2 beladen oder entladen wird. Konkret kann der Randbereich (mit oder ohne Verstärkungsanschlag 73) des an den Materialausschnitt 72 angrenzenden zweiten Hinterwandabschnittes 45b gegen das Positioniermittel angestellt werden.

In den Fig. 6a, 6b ist eine Ausführung gezeigt, wonach der zweite Hinterwandabschnitt 45b in dem das Positioniermittel umgrenzenden und an den Materialausschnitt 72 angrenzenden Randbereich umfänglich mit zumindest einem Verstärkungsanschlag versehen ist. Der Verstärkungsanschlag ist mit 73' bezeichnet und umfasst bevorzugt eine erste Verstärkungsanschlaghälfte und eine zweite Verstärkungsanschlaghälfte, welche dauerhaft miteinander verbunden sind. Beispielweise sind die erste Verstärkungsanschlaghälfte und zweite Verstärkungsanschlaghälfte über formschlüssig und/oder kraftschlüssig zusammenwirkende Kupplungselemente 85 oder über eine stoffschlüssige Verbindung miteinander verbunden. In gezeigter Ausführung sind die Kupplungselemente 85 durch eine Rastverbindung zwischen der ersten Verstärkungsanschlaghälfte und zweiten Verstärkungsanschlaghälfte gebildet. Durch die zweiteilige Ausbildung des Verstärkungsanschlages 73' ist eine einfachere Montage an der hintere Querstrebe 63 möglich.

Der Verstärkungsanschlag 73' umfasst nach diesem Ausführungsbeispiel einen ersten Lagerabschnitt 86a und einen zweiten Lagerabschnitt 86b, wobei die hintere Querstrebe 63 mit einem ersten Strebenabschnitt 87a im ersten Lagerabschnitt 86a und mit einem zweiten Strebenabschnitt 87b im zweiten Lagerabschnitt 86b gelagert ist. Der erste Lagerabschnitt 86a und zweite Lagerabschnitt 85b sind koaxial angeordnet und weisen eine gemeinsame Achse auf. Der erste Strebenabschnitt 87a und erste Lagerabschnitt 86a sind koaxial angeordnet. Der zweite Strebenabschnitt 87b und zweite Lagerabschnitt 86b sind koaxial angeordnet.

Der Verstärkungsanschlag 73' umfasst nach diesem Ausführungsbeispiel zwischen dem ersten Lagerabschnitt 86a und dem zweiten Lagerabschnitt 86b einen Materialausschnitt 88, innerhalb welchem das Positioniermittel (konkret die Ausformung 71) angeordnet ist. Der gezeigte Verstärkungsanschlag 73' ist etwa U-förmig gestaltet.

Wie bereits in der Fig. 6 beschrieben, kann auch nach dieser Ausführung die hintere Querstrebe 63 mit einem (optionalen) Positioniermittel versehen werden. Bevorzugt ist das Positioniermittel etwa mittig zwischen den Längsstreben 64 angeordnet. Das Positioniermittel ist beispielweise eine Ausformung 71, welche bevorzugt U-förmig gestaltet ist. Anstatt der Ausformung 71 kann als Positioniermittel auch ein Anschlagkörper an der hinteren Querstrebe 63 vorgesehen werden, welches mit der hinteren Querstrebe 63 fest verbunden ist. Der Anschlagkörper ist beispielweise eine Kunststoffscheibe.

Es kann sich auch von Vorteil erweisen, wenn die erste Verstärkungsanschlaghälfte und die zweite Verstärkungsanschlaghälfte an ihren einander zugewandten Innflächen vorragende Fixierstifte 89 und Begrenzungsstege 90 ausbilden. Die Fixierstifte 89 der ersten Verstärkungsanschlaghälfte und die Fixierstifte 89 der zweiten Verstärkungsanschlaghälfte sind über die Innflächen verteilt angeordnet und zueinander versetzt. Den Fixierstiften 89 der ersten Verstärkungsanschlaghälfte liegen Bohrungen / Vertiefungen 91 in der zweiten Verstärkungsanschlaghälfte gegenüber. Bevorzugt weist jeder Fixierstift 89 eine Spitze auf, welche das Material der Hinterwand 31 durchdringen und/oder in das Material eindringen kann. Die Begrenzungsstege 90 sind entlang einer an den Materialausschnitt 72 in dem zweiten Hinterwandabschnitt 45b angepassten Anordnungslinie vorgesehen und bilden eine dem Materialausschnitt 72 zugewandte Anschlagkante aus, wie in Fig. 6b eingetragen.

Grundsätzlich können die Fixierstifte 89 auch nur an einer der einander zugewandten Innflächen der ersten Verstärkungsanschlaghälfte und zweiten Verstärkungsanschlaghälfte vorgesehen werden. Ebenso können die Begrenzungsstege 90 auch nur an einer der einander zugewandten Innflächen der ersten Verstärkungsanschlaghälfte und zweiten Verstärkungsanschlaghälfte vorgesehen werden.

Auch nach dieser Ausführung bildet die Hinterwand 31 am zweiten Hinterwandabschnitt 45b einen Materialausschnitt 72, welcher zwar von dem Positioniermittel (konkret der Ausformung 71) durchragt wird, jedoch nicht unmittelbar an das Positioniermittel angrenzt.

Die Hinterwand 31 wird mit einem an den Materialausschnitt 72 angrenzenden Materialabschnitt (Randbereich) zwischen die erste Verstärkungsanschlaghälfte und zweite Verstärkungsanschlaghälfte eingelegt. Dabei kann der Materialausschnitt 72 gegen die Begrenzungsstege 90 positioniert werden. Die Begrenzungsstege 90 verhindern, dass der Materialabschnitt aus der Kontur des Materialausschnittes 88 in der Verstärkungsanschlag 73' herausragt. Werden die erste Verstärkungsanschlaghälfte und zweite Verstärkungsanschlaghälfte durch die zusammenwirkenden Kupplungselemente 85 miteinander verbunden, werden die Fixierstifte 89 wirksam und fixieren den Materialabschnitt (Randbereich) gegenüber dem Verstärkungsanschlag 73'.

Das Positioniermittel und der Verstärkungsanschlag 73' wirken derart zusammen, dass eine unerwünschte Verlagerung der Hinterwand 31 relativ gegenüber dem Rahmengestell 60 begrenzt oder vermieden und eine Zentrierung der Hinterwand 31 relativ gegenüber dem Rahmengestell 60 erreicht wird. Insbesondere ist eine Verlagerungsbewegung des Verstärkungsanschlages 73' relativ gegenüber dem Rahmengestell 60 durch das Positioniermittel (konkret der Ausformung 71) begrenzt.

Fig. 2a, 3a und 3b zeigen den Taschenkörper in seiner Transportstellung, in welcher der erste Hinterwandabschnitt 45a eine sich zwischen dem ersten Seitenrand 32a und zweiten Seitenrand 32b erstreckende Transportauflage 75 ausbildet, welche eine in Richtung der Seitenwandanschlages 46 abfallende (daher geneigt nach unten verlaufende) Transportauflagefläche 76 umfasst. Die Transportauflagefläche 76 grenzt an den Seitenwandanschlag 46 an.

Bevorzugt ist die in Richtung des Seitenwandanschlages 46 abfallende Transportauflagefläche 76 bzw. Transportauflage 75 durchgehend zwischen dem ersten Seitenrand 32a und zweiten Seitenrand 32b ausgebildet. Konkret erstreckt sich die Transportauflage 75 zwischen dem Seitenwandanschlag 46 und dem ersten Seitenrand 32a und die Transportauflagefläche 76 mündet in die Belade- und/oder Entladeöffnung 34.

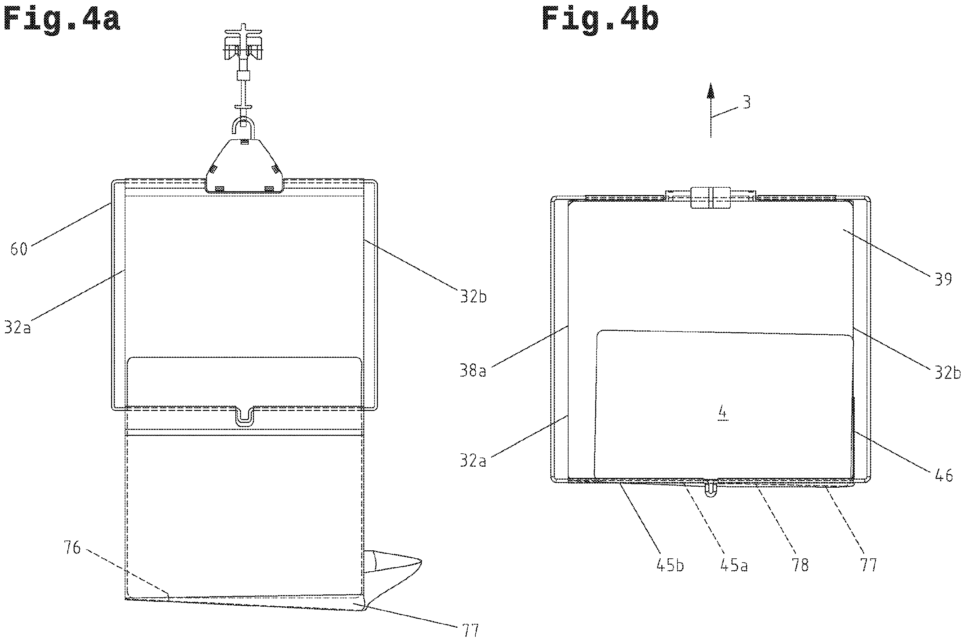

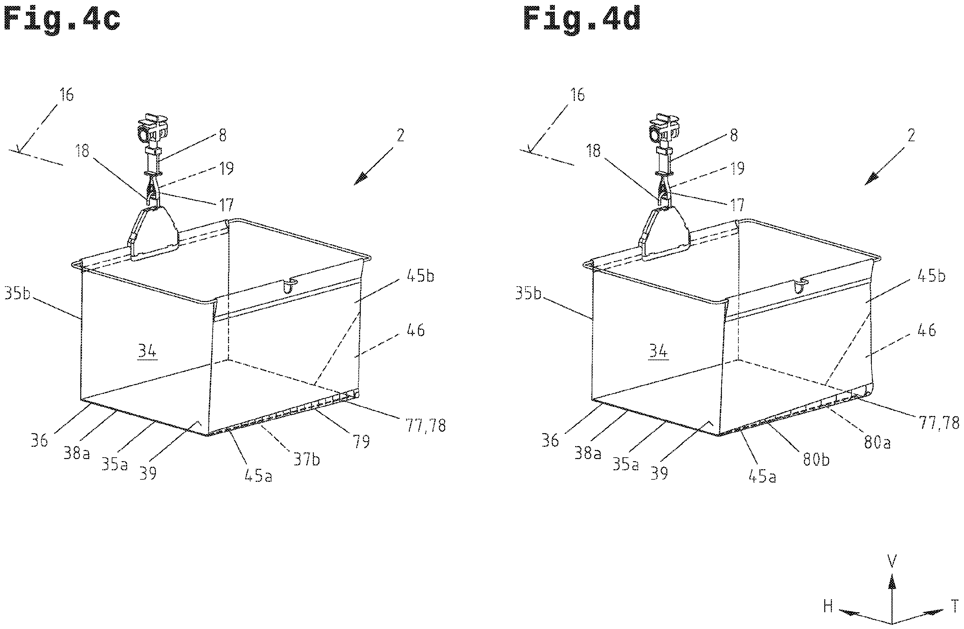

Die Fig. 4a, 4b und 4c zeigen den Fördergutbehälter 2 (Hängetasche) mit einer zweiten Ausführung eines Taschenkörpers. Fig. 4a zeigt die Transportstellung, die Fig. 4b (Draufsicht) und Fig. 4c (perspektivische Ansicht) zeigen eine der Öffnungsstellungen, welche die Beladestellung betrifft, wenn der Fördergutbehälter 2 beladen werden soll, oder die Entladestellung, wenn der Fördergutbehälter 2 entladen werden soll.

Der Fördergutbehälter 2 nach Fig. 4a, 4b und 4c unterscheidet sich von der ersten Ausführung dadurch, dass der Taschenkörper eine nachfolgend beschriebene Führungswandung 77 umfasst. Fig. 4c zeigt den Taschenkörper in seiner Belade- und/oder Endladestellung, in welcher der erste Hinterwandabschnitt 45a eine sich zwischen dem ersten Seitenrand 32a und zweiten Seitenrand 32b erstreckende und gegenüber die Bodenplatte 36 (Bodenstruktur) nach oben vorragende Führungswandung 77 (schraffierter erster Wandabschnittsteil) ausbildet. Die Führungswandung 77 umfasst in einem ersten Wandabschnittsteil eine sich in Richtung der Belade- und/oder Endladeöffnung 34 verjüngende Führungswandfläche 78. Die Führungswandfläche 78 ist im Wesentlichen eben. Dies bedeutet, dass in der Belade- und/oder Endladestellung eine (hintere) Öffnungsweite zwischen dem zweiten Vorderwandabschnitt 35b und dem ersten Hinterwandabschnitt 45a am zweiten Seitenrand 32b größer bemessen ist als eine (vordere) Öffnungsweite zwischen dem zweiten Vorderwandabschnitt 35b und dem ersten Hinterwandabschnitt 45a am ersten Seitenrand 32a.

Der Seitenwandanschlag 46 ist mit dem ersten Hinterwandabschnitt 45a, zweiten Hinterwandabschnitt 45b und ersten Vorderwandabschnitt 35a derart verbunden, insbesondere vernäht oder verklebt, dass in der Belade- und/oder Endladestellung der erste Hinterwandabschnitt 45a eine vom zweiten Seitenrand 32b (bzw. Seitenwandanschlag 46) in Richtung zum ersten Seitenrand 32a verlaufende Faltkante 79 bildet, die den ersten Hinterwandabschnitt 45a in den (schraffierten) ersten Wandabschnittsteil und den (nicht schraffierten) zweiten Wandabschnittsteil teilt. Die Längskante 36a, Faltkante 79, der erste Seitenrand 32a und zweite Seitenrand 32b (bzw. Seitenwandanschlag 46) spannen zwischen sich den (nicht schraffierten) zweiten Wandabschnittsteil auf. Der zweite Wandabschnittsteil verläuft im Nahbereich der Bodenplatte 36 (Bodenstruktur) und in einer im Wesentlich parallel zur Bodenplatte 36 (Bodenstruktur) verlaufenden Ebene.

Die Fig. 4d zeigt den Fördergutbehälter 2 (Hängetasche) mit einer dritten Ausführung eines Taschenkörpers in einer der Öffnungsstellungen, welche die Beladestellung betrifft, wenn der Fördergutbehälter 2 beladen werden soll, oder die Entladestellung, wenn der Fördergutbehälter 2 entladen werden soll.

Der Fördergutbehälter 2 nach Fig. 4d unterscheidet sich von der ersten Ausführung dadurch, dass der Taschenkörper eine nachfolgend beschriebene Führungswandung 77 umfasst.

Fig. 4d zeigt den Taschenkörper in seiner Belade- und/oder Endladestellung, in welcher der erste Hinterwandabschnitt 45a eine sich zwischen dem ersten Seitenrand 32a und zweiten Seitenrand 32b erstreckende und gegenüber die Bodenplatte 36 (Bodenstruktur) nach oben vorragende Führungswandung 77 ausbildet. Die Führungswandung 77 umfasst (in einem Wandabschnittsteil) eine sich in Richtung der Belade- und/oder Endladeöffnung 34 verjüngende Führungswandfläche 78. Dies bedeutet, dass in der Belade- und/oder Endladestellung eine (hintere) Öffnungsweite zwischen dem zweiten Vorderwandabschnitt 35b und dem ersten Hinterwandabschnitt 45a am zweiten Seitenrand 32b größer bemessen ist als eine (vordere) Öffnungsweite zwischen dem zweiten Vorderwandabschnitt 35b und dem ersten Hinterwandabschnitt 45a am ersten Seitenrand 32a.

Nach dieser Ausführung spannen eine erste Mantellinie 80a und eine zweite Mantellinie 80b eines Kreiskegels oder Kegelstumpfes zwischen sich die (schraffierte) Führungswandfläche 78 auf. Die zweite Längskante 37b und erste Mantellinie 80a verlaufen bevorzugt deckungsgleich. Der erste Hinterwandabschnitt 45a ist an seinem dem zweiten Seitenrand 35b näher gelegenen (hinteren) Querschnittsende mit einem ersten Radius und einem dem ersten Seitenrand 35a näher gelegenen (vorderen) Querschnittsende mit einem zweiten Radius gestaltet, wobei der ersten Radius größer bemessen ist als der zweite Radius.

Der Seitenwandanschlag 46 ist mit dem ersten Hinterwandabschnitt 45a, zweiten Hinterwandabschnitt 45b und ersten Vorderwandabschnitt 35a derart verbunden, insbesondere vernäht oder verklebt, dass in der Belade- und/oder Endladestellung der erste Hinterwandabschnitt 45a die beschriebene Führungswandfläche 78 bildet.

Bevorzugt ist die in Richtung der Belade- und/oder Endladeöffnung 34 verjüngende Führungswandfläche 78 bzw. Führungswandung 77 durchgehend zwischen dem ersten Seitenrand 32a und zweiten Seitenrand 32b ausgebildet. Konkret erstreckt sich die Führungswandung 77 zwischen dem Seitenwandanschlag 46 und dem ersten Seitenrand 32a und die Führungswandfläche 78 mündet in die Belade- und/oder Entladeöffnung 34.

Es ist eine Ausführung möglich, nach welcher der erste Hinterwandabschnitt 45a die sich zwischen dem ersten Seitenrand 32a und zweiten Seitenrand 32b erstreckende und gegenüber die Bodenplatte (Bodenstruktur) nach oben vorragende Führungswandung 77 ausbildet, welche in einem Wandabschnittsteil eine derart gestaltete Betätigungswandfläche ausbildet, mittels welcher
- das Fördergut 4 in Horizontalrichtung (H) mit einer ersten Kraftkomponente und in Vertikalrichtung (V) mit einer zweiten Kraftkomponente (beispielweise nach einer Ausführung gemäß Fig. 4a, 4b und 4c), oder
- das Fördergut 4 in Horizontalrichtung (H) mit einer ersten Kraftkomponente, in Vertikalrichtung (V) mit einer zweiten Kraftkomponente und in Tiefenrichtung (T) mit einer dritten Kraftkomponente (beispielweise nach einer Ausführung gemäß Fig. 4d),
beaufschlagt wird, wenn der Taschenkörper von der Transportstellung in die Endladestellung umgestellt wird.

Die Betätigungswandfläche kann durch die oben beschriebene Führungswandfläche 78 nach der Ausführung in den Fig. 4a, 4b und 4c oder Fig. 4d gebildet sein.

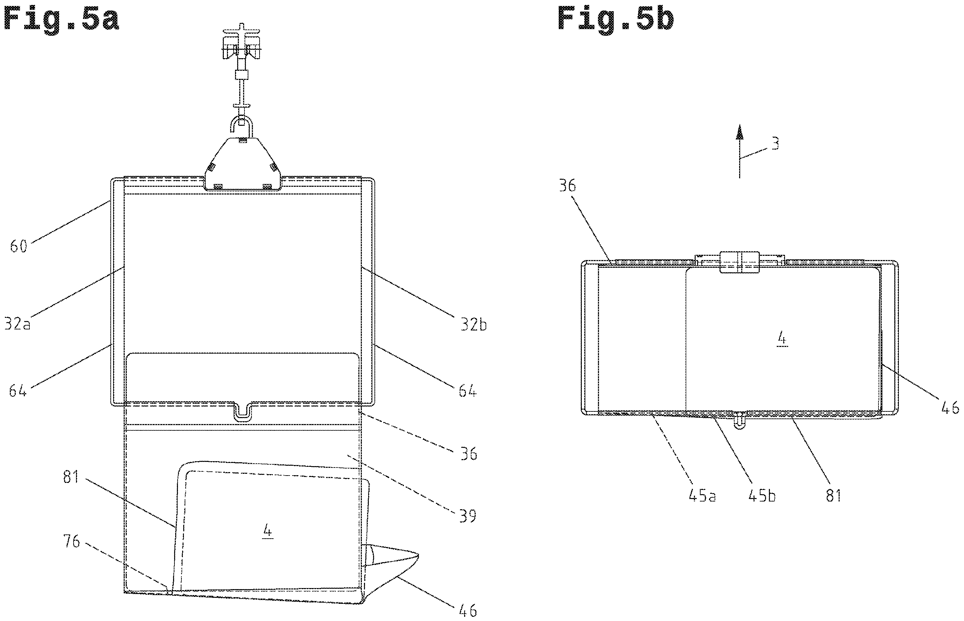

Die Fig. 5a, 5b zeigen den Fördergutbehälter 2 (Hängetasche) mit einer vierten Ausführung eines Taschenkörpers in Transportstellung. Es erweist sich auch von Vorteil, wenn in der Transportstellung des Taschenkörpers der zweite Hinterwandabschnitt 45b zwischen dem ersten Seitenrand 32a und zweiten Seitenrand 32b eine in Richtung der Belade- und/oder Endladeöffnung 34 verjüngende Stützwandung 81 ausbildet. Dadurch kann Fördergut 4 zwischen der Bodenplatte 36 (Bodenstruktur) im ersten Vorderwandabschnitt 35a und der Stützwandung 81 im zweiten Hinterwandabschnitt 45b klemmend gehalten werden. Die Hinterwand 31 ist aus biegeschlaffen Material, sodass sich der zweite Hinterwandabschnitt 45b eng an das Fördergut 4, insbesondere an der Ecke und Kante anschmiegt. Das Fördergut 4 ist durch einen Form- und Kraftschluss gehalten.

Es sei an dieser Stelle hingewiesen, dass die verschiedenen Ausführung des Taschenkörpers jeweils für sich eine eigenständige Erfindung bilden können. Hierzu sei auch angemerkt, dass nach der Erfindung gemäß der zweiten, dritten und vierten Ausführung, der Taschenkörper in seiner Transportstellung auch eine Transportauflage 75 zwischen dem ersten Seitenrand 32a und zweiten Seitenrand 32b ausbilden kann, welche eine im Wesentlichen horizontal verlaufende Transportauflagefläche umfasst, wie dies näher dargestellt ist.

Es erweist sich aber von Vorteil, wenn die erste, zweite, dritte und vierte Ausführung des Taschenkörpers kombiniert werden. Möglich ist aber auch eine Kombination der ersten Ausführung mit nur einer der zweiten, dritten oder vierten Ausführungen.

In Fig. 8 ist ein Zuschnitt aus einer Materialbahn mit Ansicht auf die Innenseite der Vorderwand 30 und Hinterwand 31 eines Taschenkörpers, insbesondere nach der Ausführung in Fig. 4d oder nach einer Ausführung aus der Kombination von Fig. 4d und Fig. 5a, 5b, gezeigt.

Wie bereits oben beschrieben umfasst die Vorderwand 30 den ersten Vorderwandabschnitt 35a und zweiten Vorderwandabschnitt 35b, wobei im ersten Vorderwandabschnitt 35a die Bodenplatte 36 (Bodenstruktur) vorgesehen ist. Die Bodenplatte 36 (Bodenstruktur) ist in etwa quadratisch gestaltet. Die Hinterwand 31 umfasst den ersten Hinterwandabschnitt 45a und zweiten Hinterwandabschnitt 45b, wobei der erste Hinterwandabschnitt 45a an den ersten Vorderwandabschnitt 35a angrenzt. Eingetragen sind auch die Materialausschnitte 70, 72.

Im ersten Vorderwandabschnitt 35a verlaufen die Längsrandabschnitte der Längsränder 32a, 32b parallel und weisen dieselbe Länge auf. Im zweiten Vorderwandabschnitt 35b verlaufen die Längsrandabschnitte der Längsränder 32a, 32b entweder parallel (feste Linien) oder zueinander geneigt (strichpunktiert Linien), nach letzterer Ausführung verjüngt sich der zweite Vorderwandabschnitt 35b mit zunehmenden Abstand vom ersten Vorderwandabschnitt 35a. Die Längsränder 32a, 32b weisen dieselbe Länge auf.

Im ersten Hinterwandabschnitt 45a weisen die Längsrandabschnitte der Längsränder 32a, 32b unterschiedliche Längen auf. Konkret beträgt im ersten Hinterwandabschnitt 45a die Länge eines ersten Längsrandabschnittes am ersten Längsrand 32a annähernd Null oder ist Null. Ein zweiter Längsrandabschnitt am zweiten Längsrand 32b ist jedenfalls länger als der erste Längsrandabschnitt am ersten Längsrand 32a.

Im zweiten Hinterwandabschnitt 45a verlaufen die Längsrandabschnitte der Längsränder 32a, 32b parallel und weisen unterschiedliche Längen auf. Konkret ist die Länge des ersten Längsrandabschnittes am ersten Längsrand 32a auf der ersten Seite (nahe der Belade- und/oder Entladeöffnung) kleiner bemessen als die Länge des zweiten Längsrandabschnittes am zweiten Längsrand 32b auf der zweiten Seite (nahe dem Seitenwandanschlag 46). Der zweite Hinterwandabschnitt 45a verläuft winkelig zum ersten Vorderwandabschnitt 35a.

Der Seitenwandanschlag 46 wird vornehmlich aus einer gesonderten Materialbahn zugeschnitten und an dem zumindest einen Materialzuschnitt für die Vorderwand 30 und Hinterwand 31 angefügt, insbesondere am ersten Vorderwandabschnitt 35a, ersten Hinterwandabschnitt 45a und zweiten Hinterwandabschnitt 45b angenäht.

Wie in Fig. 8 in strichlierte Linien schematisch angedeutet, ist eine Innenkontur des Rahmengestelles 60 an eine Außenkontur der Bodenplatte 36 (Bodenstruktur) derart angepasst, dass die Bodenplatte 36 (Bodenstruktur) in im Wesentlichen unverformten Zustand durch das Rahmengestell 60 durchgeführt werden kann, wenn der Taschenkörper durch das Rahmengestell 60 in die Belade- und/oder Entladestellung umgestellt ist. Der Taschenkörper kann umgestülpt werden, sodass die Innenseite des Taschenkörpers zur Außenseite des Taschenkörpers wird. Der Fördergutbehälter 2 kann dennoch in gleicher Weise verwendet werden, es ist dieser lediglich um 180° gedreht an der Hängefördervorrichtung aufzuhängen. Dabei kann es sich auch von Vorteil erweisen, wenn der erste Vorderwandabschnitt 35a an der Innenseite des Taschenkörpers und an der Außenseite des Taschenkörpers unterschiedliche Materialeigenschaften, vorzugsweise Reibwerte, aufweist. Dies ist beispielweise gegeben, wenn im ersten Vorderwandabschnitt 35a die Bodenplatte 36 (Bodenstruktur) vorgesehen ist, welche der Innenseite des Taschenkörpers zugewandt ist, während im ersten Vorderwandabschnitt 35a die Außenseite keine Bodenplatte 36 vorsieht. Die Materialeigenschaft im ersten Vorderwandabschnitt 35a an der Außenseite bestimmt sich dann durch das verwendete biegeschlaffe Material.

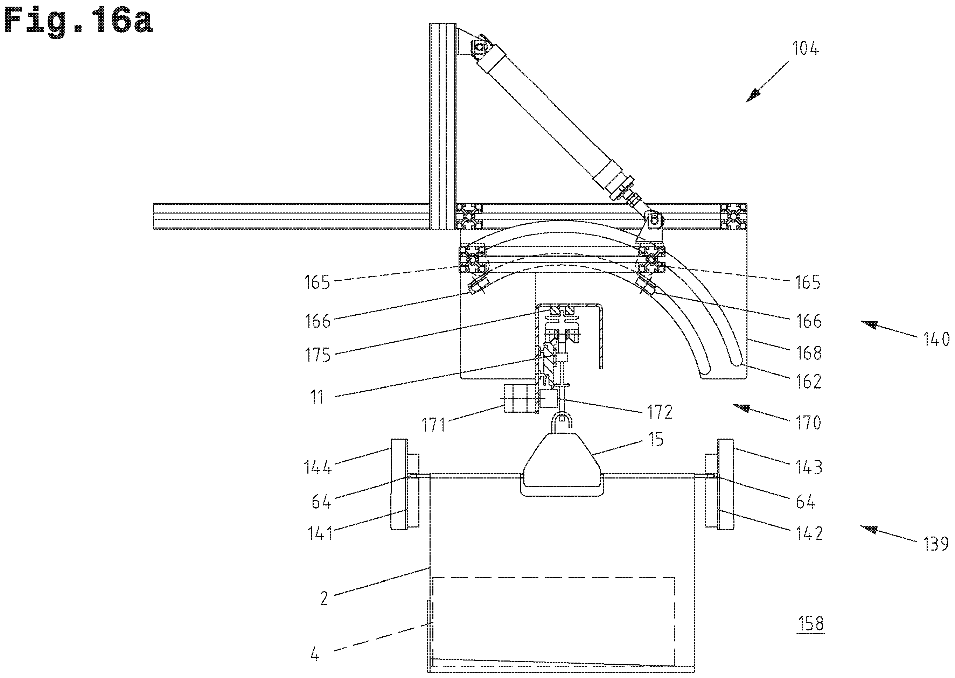

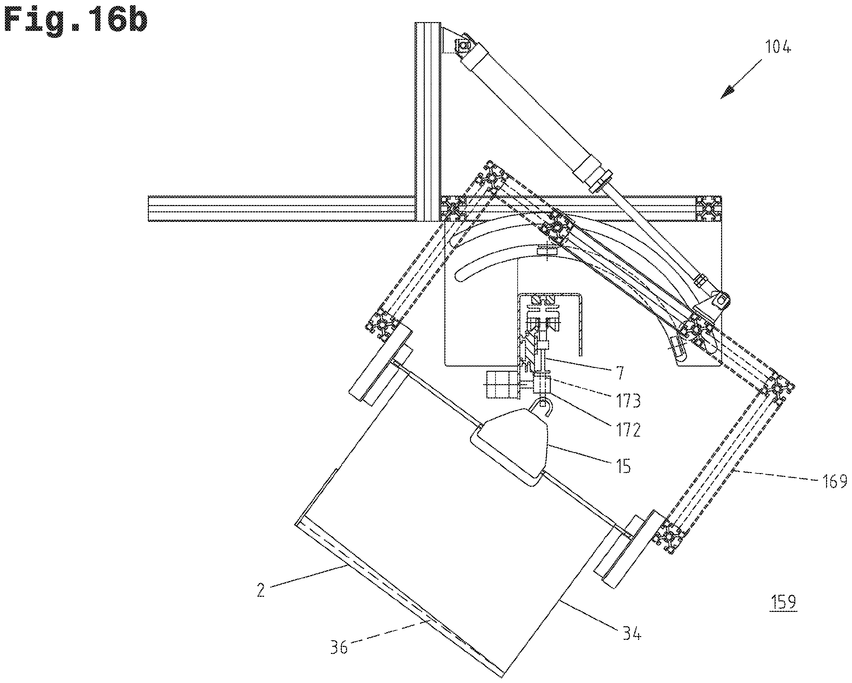

In den Fig. 9, 16a und 16b ist die Entladestation 104 in unterschiedlichen Ansichten gezeigt. Diese umfasst die Hängefördervorrichtung 1 zum Antransport des Fördergutbehälters 2 in die Entladestation 104 und Abtransport des Fördergutbehälters 2 aus der Entladestation 104, eine Öffnungs- und Schließvorrichtung 139 zum Verstellen des Taschenkörpers zwischen der Transportstellung und der Belade- und/oder Entladestellung und eine Entladevorrichtung 140 zum Entladen des in die Öffnungsstellung verstellten Taschenkörpers.

Die Öffnungs- und Schließvorrichtung 139 umfasst eine Betätigungsvorrichtung zum automatischen Öffnen und Schließen des Taschenkörpers, durch welche das Rahmengestell 60 relativ zum Hängeträger 15 um die Achse 61 derart schwenkbar ist, dass der Taschenkörper zwischen der Transportstellung und der Belade- und/oder Entladestellung umstellbar ist.

Nach einer möglichen Ausführung umfasst die Betätigungsvorrichtung zum automatischen Öffnen und Schließen des Taschenkörpers eine Mitnehmermechanik. Die Mitnehmermechanik umfasst bevorzugt eine erste Mitnehmermechanik 141 und eine zweite Mitnehmermechanik 142, die zu beiden Seiten und unterhalb der Hängefördervorrichtung 1 zum Antransport des Fördergutbehälters 2 in die Entladestation 104 und Abtransport des Fördergutbehälters 2 aus der Entladestation 104 angeordnet sind. Insbesondere sind die erste Mitnehmermechanik 141 und zweite Mitnehmermechanik 142 bezüglich des Fördergutbehälters 2, insbesondere des Rahmengestelles 60, zueinander symmetrisch angeordnet. Grundsätzlich kann aber auch nur eine der Mitnehmermechaniken 141 vorgesehen werden.

Die erste Mitnehmermechanik 141 ist an einem ersten Tragrahmen 143 und die zweite Mitnehmermechanik 142 ist an einem zweiten Tragrahmen 144 befestigt. Der erste Tragrahmen 143 und zweite Tragrahmen 144 sind Teil der Betätigungsvorrichtung.

Im gezeigten Ausführungsbeispiel umfasst die erste Mitnehmermechanik 141 eine untere Führungsanordnung und eine obere Führungsanordnung, ebenso umfasst die zweite Mitnehmermechanik 142 eine untere Führungsanordnung und eine obere Führungsanordnung. Die untere Führungsanordnung und obere Führungsanordnung sind mit Abstand übereinander angeordnet, sodass zwischen der unteren Führungsanordnung und oberen Führungsanordnung der ersten Mitnehmermechanik 141 und zwischen der unteren Führungsanordnung und oberen Führungsanordnung der zweiten Mitnehmermechanik 142 jeweils eine der Längsstreben 64 aufgenommen werden kann. Der Abstand entspricht im Wesentlichen dem Durchmesser der Längsstrebe 64. Die erste Mitnehmermechanik 141 und/oder zweite Mitnehmermechanik 142 kann aber auch nur die untere Führungskulisse umfassen.

Die untere Führungsanordnung und, sofern vorgesehen, die obere Führungsanordnung, der ersten Mitnehmermechanik 141 und, sofern vorgesehen, der zweiten Mitnehmermechanik 142 umfassen in Transportrichtung 3 des Fördergutbehälters 2 einen stromaufwärts gelegenen Einlaufabschnitt 145, einen stromabwärts gelegenen Auslaufabschnitt 146 und zwischen dem Einlaufabschnitt 145 und Auslaufabschnitt 146 angeordneten Endladeabschnitt 147. Die untere Führungsanordnung und, sofern vorgesehen, die obere Führungsanordnung, der ersten Mitnehmermechanik 141 und/oder zweiten Mitnehmermechanik 142 verlaufen parallel zur Transportrichtung 3 des Fördergutbehälters 2.

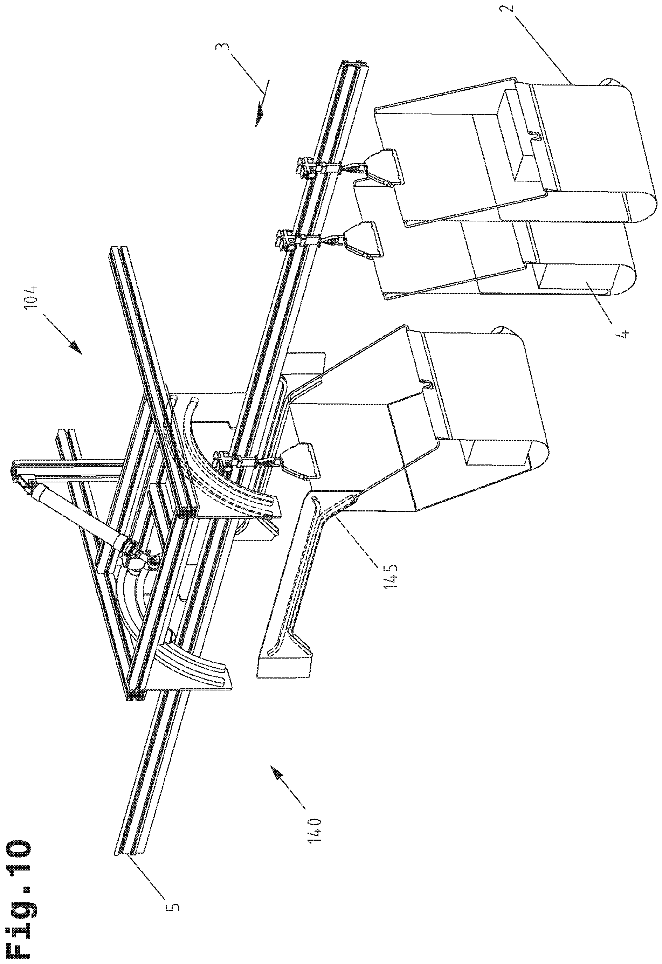

Der Einlaufabschnitt 145 bildet eine mit dem Rahmengestell 60, insbesondere den Längsstreben 64, derart in einen Anlagekontakt bringbare geneigte Führungskulisse 148 aus, dass das Rahmengestell 60 während des Antransportes des Fördergutbehälters 2 in die Entladestation 104 verschwenkt wird, wodurch der Taschenkörper aus der Transportstellung in Richtung der Belade- und/oder Entladestellung umgestellt wird (Fig. 10).

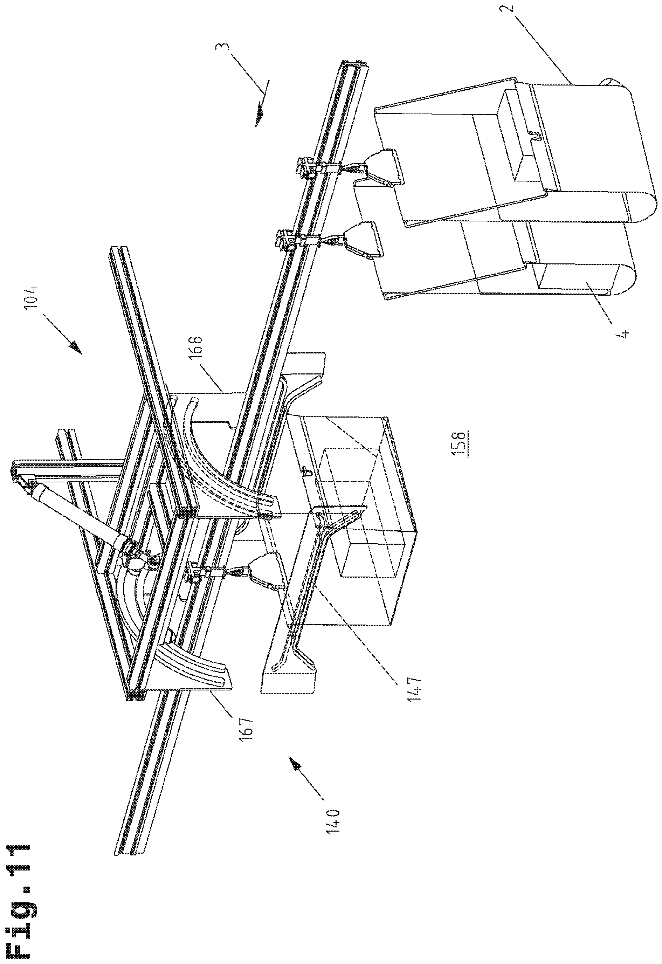

Der Endladeabschnitt 147 bildet eine mit dem Rahmengestell 60, insbesondere den Längsstreben 64, derart in einen Anlagekontakt bringbare und im Wesentlichen horizontale Führungskulisse 149 aus, dass das Rahmengestell 60 während des Entladevorganges in der verschwenkten Auslenkstellung gehalten wird, wodurch auch der Taschenkörper in der Öffnungsstellung verbleibt (Fig. 11).

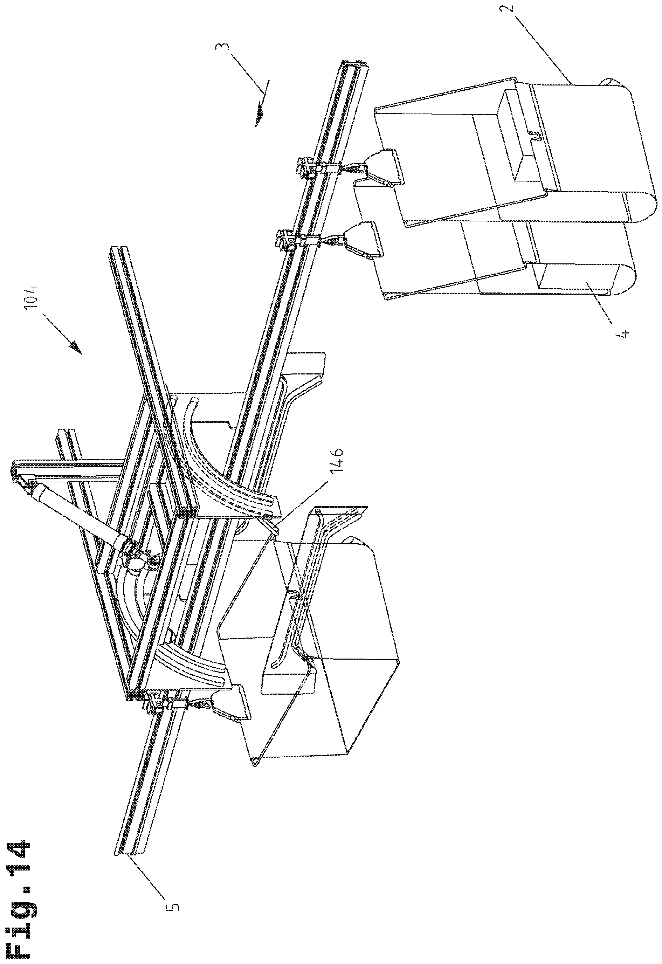

Der Auslaufabschnitt 146 bildet eine mit dem Rahmengestell 60, insbesondere den Längsstreben 64, derart in einen Anlagekontakt bringbare geneigte Führungskulisse 150 aus, dass das Rahmengestell 60 während des Abtransportes des Fördergutbehälters 2 aus der Entladestation 104 verschwenkt wird, wodurch der Taschenkörper aus der Belade- und/oder Entladestellung in Richtung der Transportstellung umgestellt wird (Fig. 14).

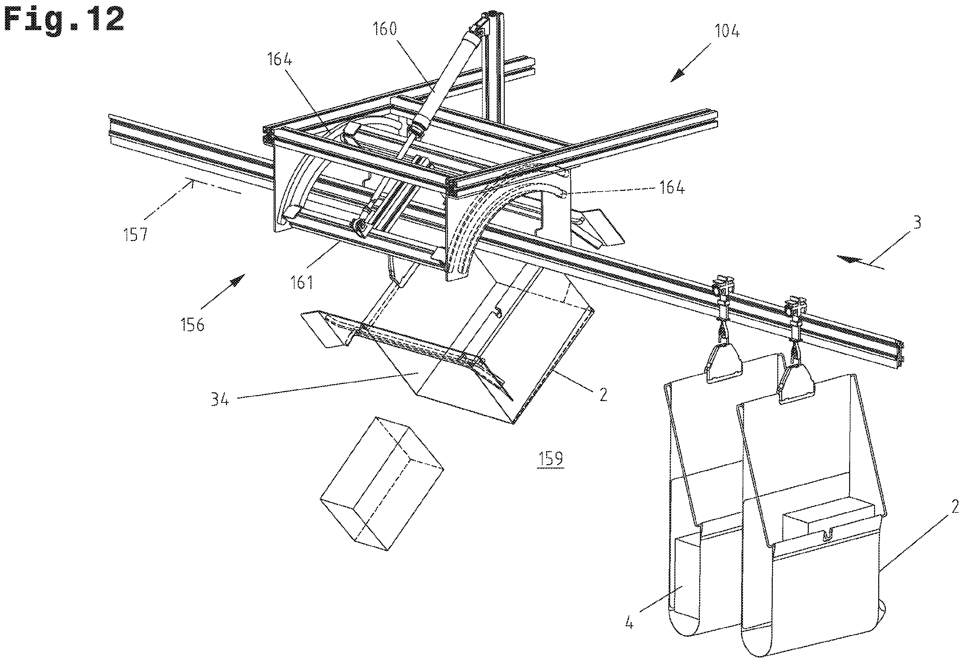

Wie in den Figuren ersichtlich umfasst die Entladevorrichtung 140 eine Betätigungsvorrichtung 156, durch welche der Fördergutbehälter 2 mit dem Taschenkörper um eine im Wesentlichen parallel zur Längserstreckung der Hängefördervorrichtung 1 verlaufenden Kippachse 157 zwischen einer Bereitstellposition 158 (Fig. 11, 16a) und einer Entladeposition 159 (Fig. 12, 16b) kippbar ist, wobei in der Entladeposition 159 das Fördergut 4 durch die Beladeund/oder Entladeöffnung 34 aus dem Fördergutbehälter 2 abgebbar ist. Das Fördergut 4 wird vorzugsweise in ein nicht dargestelltes Behältnis oder auf eine nicht dargestellte Fördervorrichtung, beispielsweise einen Bandförderer geladen. Dieses Behältnis kann auch den Versandkarton darstellen.

In einer bevorzugten ersten Ausführung wird der Fördergutbehälter 2 mit dem in die Öffnungsstellung (Entladestellung) verstellten Taschenkörper um die Kippachse 157 zwischen einer Bereitstellposition 158 (Fig. 11, 16a) und einer Entladeposition 159 (Fig. 12, 16b) gekippt. Mit anderen Worten wird vor dem Entladen in einem vorausgehenden ersten Schritt i) der Taschenkörper in die Entladestellung umgestellt - der Fördergutbehälter 2 befindet sich nun in der Bereitstellposition 158, und in einem nachfolgenden zweiten Schritt ii) der Fördergutbehälter 2 mit dem in die Entladestellung verstellten Taschenkörper um die Kippachse 157 geschwenkt - der Fördergutbehälter 2 befindet sich nun in der Entladeposition 159.

Nach dem Entladen wird der Fördergutbehälter 2 mit dem in die Entladestellung verstellten Taschenkörper um die Kippachse 157 von der Entladeposition 159 (Fig. 12, 16b) in die Bereitstellposition 158 (Fig. 11, 16a) rückgekippt. Danach wird der Fördergutbehälter 2 durch die Hängefördervorrichtung 1 abtransportiert.

Nach einer zweiten Ausführung wird der Fördergutbehälter 2 noch während der Umstellbewegung des Taschenkörpers zwischen der Transportstellung und der Entladestellung um die Kippachse 157 zwischen der Bereitstellposition 158 und der Entladeposition 159 gekippt. Mit anderen Worten wird zum Entladen noch während des Öffnungsvorganges des Taschenkörpers von der Transportstellung in Richtung der Entladestellung der Fördergutbehälter 2 um die Kippachse 157 von der Bereitstellposition 158 in die Entladeposition 159 gekippt. Gleichermaßen kann nach dem Entladen während des Schließvorganges des Taschenkörpers von der Entladestellung in Richtung der Transportstellung der Fördergutbehälter 2 um die Kippachse 157 von der Entladeposition 159 in die Bereitstellposition 158 gekippt werden.

Die Betätigungsvorrichtung 156 der Entladevorrichtung 140 umfasst einen mittels eines Antriebes 160 um eine parallel zur Transportrichtung 3 der Fördergutbehälter 2 verlaufende Achse zwischen einer Ausgangsstellung und einer Betätigungsstellung kippbaren Rahmen 161. Der Antrieb 160 ist beispielsweise ein Fluidzylinder.

In der gezeigten Ausführung ist der Rahmen 161 über Führungsanordnungen 162 an einer ortsfesten aufgestellten Tragkonstruktion 163 gelagert. Die Führungsanordnungen 162 umfassen jeweils Führungskulissen 164 und abrollbar aufliegenden Führungsrollen 165, 166 (Fig. 9, 16a). Die Führungskulissen umfassen die (linke) erste Führungskulisse 164 und die (rechte) zweite Führungskulisse 164. Die erste Führungskulisse 164 ist an einem ersten Tragrahmen 167 und die zweite Führungskulisse 164 ist an einem zweiten Tragrahmen 168 befestigt. Der Rahmen 161 weist einander gegenüberliegende Rahmenseiten auf, wobei an der ersten Rahmenseite die Führungsrollen 165, 166 und an der zweiten Rahmenseite die Führungsrollen 165, 166 angeordnet sind.

Wie aus Gründen der besseren Übersicht ausschließlich in Fig. 16b in strichlierte Linien dargestellt, ist die Betätigungsvorrichtung der Öffnungs- und Schließvorrichtung 139 am kippbaren Rahmen 161 gelagert.

Konkret ist die erste Mitnehmermechanik 141 mit dem ersten Tragrahmen 143 und die zweite Mitnehmermechanik 142 mit dem zweiten Tragrahmen 144 1 über Rahmenverbindungen 169 am Rahmen 161 befestigt.

Somit wird die Öffnungs- und Schließvorrichtung 139 gemeinsam mit dem Rahmen 161 gekippt und es wird der Fördergutbehälter 2 auch in der Entladeposition 159 (zwischen der unteren Führungsanordnung und oberen Führungsanordnung der ersten Mitnehmermechanik 141 und, sofern vorhanden, zwischen der unteren Führungsanordnung und oberen Führungsanordnung der zweiten Mitnehmermechanik 144 jeweils eine der Längsstreben 64) im Wesentlichen fixiert gehalten.

In den Fig. 16a, 16b ist die Entladestation 104 mit der der Öffnungs- und Schließvorrichtung 139 gezeigt. In Fig. 16a befindet sich der Fördergutbehälter 2 in der Bereitstellposition 158 und der Taschenkörper in seiner Entladestellung bzw. Öffnungsstellung (vergleiche auch Fig. 11). In Fig. 16b befindet sich der Fördergutbehälter 2 in der Entladeposition 159 und der Taschenkörper in seiner Entladestellung bzw. Öffnungsstellung (vergleiche auch Fig. 12).

Die Entladestation 104 umfasst nach dieser Ausführung zusätzlich eine Feststellvorrichtung 170 zur Arretierung des Transportträgers 7 während eines Entladevorganges des Fördergutbehälters 2.

Die Feststellvorrichtung 170 umfasst zum Arretieren des Transportträgers 7 ein mittels eines Antriebs 171 zwischen einer unwirksamen Ausgangsstellung (Fig. 16a) und einer wirksamen Betätigungsstellung (Fig. 16b) bewegbares Arretierelement 172. Das Arretierelement 172 umfasst beispielweise einen Anschlag, gegen welchen ein Profilsteg 173 des Transportträgers 7 aufläuft und den Transportträger 7 in Transportrichtung 3 positioniert.

Die Entladestation 104 kann ferner eine parallel zur Transportrichtung 3 verlaufende Führungsvorrichtung 175 zur Seitenführung des Transportträgers 7 während einer Transportbewegung des Transportträgers 7 durch die Hängefördervorrichtung 1 zum Antransport des Fördergutbehälters 2 in die Entladestation 104 und Abtransport des Fördergutbehälters 2 aus der Entladestation 104 umfassen. Außerdem ist die Führungsvorrichtung 175 während des Entladevorganges und wenn der Fördergutbehälter 2 zwischen der Bereitstellposition 158 und Entladeposition 159 um die Kippachse 157 gekippt wird wirksam, indem der Transportträger 7 gegen eine Seitwärtsbewegung (quer zur Transportrichtung 3) fixiert bzw. eine Seitwärtsbewegung (quer zur Transportrichtung 3) begrenzt wird.

Das Verfahren zum Entladen eines Fördergutes 4 aus einem Fördergutbehälter 2 ist in der AT 2018/50320 beschrieben.

Auch wenn sich der oben beschriebene Fördergutbehälter 2 besonders gut zum automatischen Beladen und automatischen Entladen eignet, ist es genauso gut möglich, den Fördergutbehälter 2 manuell zu beladen und manuell zu entladen. Auch ist ein manuelles Beladen und automatisches Entladen oder umgekehrt möglich.

Ebenso sei darauf hingewiesen, dass der Fördergutbehälter 2 nicht zwingenderweise ein Rahmengestell 60 und insbesondere ein "umlaufendes" Rahmengestell 60 umfassen muss. Ebenso kann der Hängeträger 15, die Hängefördervorrichtung 1, die Beladestation und/oder Entladestation nach einer anderen Ausführung gestaltet werden, wie beispielweise in der WO 2016/120031 A1 beschrieben. Nach dieser Ausführung umfasst der Fördergutbehälter 2 einen zwischen einer Transportstellung und einer Belade- und/oder Endladestellung umstellbaren Taschenkörper. Anstatt dem oben beschriebenen Rahmengestell werden voneinander getrennte Querstreben verwendet, wobei die Vorderwand an einer vorderen Querstrebe und die Hinterwand an einer hinteren Querstrebe gelenkig angebracht sind. Längsstreben, welche mit der vorderen Querstrebe und hinteren Querstrebe verbunden sind, sind nicht vorgesehen. Ebenso erfolgt das Umstellen des Taschenkörpers zwischen einer Transportstellung und einer Belade- und/oder Endladestellung durch von dem Fördergutbehälter getrennt angeordnete Betätigungsmechanismen, welche mit der vorderen Querstrebe und/oder hinteren Querstrebe zusammenwirken können. Der in der WO 2016/120031 A1 offenbarte Fördergutbehälter kann ebenso den in den verschiedenen Ausführungen beschriebenen Taschenkörper umfassen, ohne die Lehre der Erfindungen zu verlassen.

Es sei auch hingewiesen, wie schematisch und ausschließlich in Fig. 8 eingetragen, dass die Vorderwand 30 im ersten Vorderwandabschnitt 35a mit einer Bodenplatte 36 und Verstärkungselementen 100 versehen sein kann. Diese Modifizierung ist auf sämtliche der oben beschriebenen Ausführungen für den Taschenkörper bzw. Fördergutbehälter übertragbar.

Ist die Bodenplatte 36 (nach der ersten Ausführung) separat vom Taschenkörper hergestellt, wie oben beschrieben, so wird die Bodenplatte 36 im ersten Vorderwandabschnitt 35a bevorzugt innenliegend am Taschenkörper angeordnet, während die Verstärkungselemente 100 im ersten Vorderwandabschnitt 35a bevorzugt außenliegend am Taschenkörper angeordnet werden. Die Verstärkungselemente 100 umfassen nach gezeigter Ausführung einen parallel zu dem ersten Seitenrand 32a verlaufenden ersten Aufnahmekanal 101a und einen in diesen eingeschobenen ersten Drahtstab 102a und einen parallel zu dem zweiten Seitenrand 32b verlaufenden zweiten Aufnahmekanal 101b und einen in diesen eingeschobenen zweiten Drahtstab 102b. Der erste Aufnahmekanal 101a ist in einem ersten Textilstreifen ausgebildet, welcher im ersten Vorderwandabschnitt 35a am Taschenkörper angenäht oder angeklebt ist, und der zweite Aufnahmekanal 101b ist in einem zweiten Textilstreifen ausgebildet, welcher im ersten Vorderwandabschnitt 35a am Taschenkörper angenäht oder angeklebt ist. Grundsätzlich könnte aber auch die Bodenplatte 36 den ersten Aufnahmekanal 101a und den zweiten Aufnahmekanal 101a ausbilden. Dadurch kann die Bodenplatte 36 besonders dünn ausgebildet werden, insbesondere mit einer Dicke von maximal 1mm. Das Beladen und/oder Entladen an einer automatischen Beladevorrichtung und/oder Entladevorrichtung kann besonders zuverlässig erfolgen.

Die Verstärkungselemente 100 können aber auch durch eine größere Materialdicke oder höheren Materialdichte gebildet sein, beispielweise nach der oben beschriebenen Ausführung, wo die Bodenplatte 36 nicht separat vom Taschenkörper hergestellt ist. Auch diese Maßnahme führt zu einer besonders formstabilen Bodenplatte 36.

Abschließend wird auch festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Fördergutbehälter 2 in der Realität auch mehr oder auch weniger Bestandteile als dargestellt umfassen können. Teilweise können die dargestellten Fördergutbehälter 2 beziehungsweise deren Bestandteile auch unmaßstäblich und/oder vergrößert und/oder verkleinert dargestellt sein.

### Bezugszeichenaufstellung

| | | | |
|---|---|---|---|
| 1 | Hängefördervorrichtung | 61 | Achse |
| 2 | Fördergutbehälter | 63 | Querstrebe |
| 3 | Transportrichtung | 64 | Längsstrebe |
| 4 | Fördergut | 65a | erster Strebenabschnitt |
| 5 | Antriebsvorrichtung | 65b | zweiter Strebenabschnitt |
| | | 66a | erster Strebenschaft |
| 7 | Transportträger | 66b | zweiter Strebenschaft |
| 8 | Hängekörper | 67a | erster Strebenkopf |
| 9 | Laufrolle | | |
| 10 | Reibfläche | 67b | zweiter Strebenkopf |
| 11 | Reibband | 68a | erster Lagerabschnitt |
| | | 68b | zweiter Lagerabschnitt |
| 12 | Profilschiene | 69a | erste Strebenkopfaufnahme |
| 15 | Hängeträger | 69b | zweite Strebenkopfaufnahme |
| 16 | Achse | | |
| 17 | Kupplungselement | | |
| 18 | Kupplungselement | 70 | Materialausschnitt |
| | | 71 | Positioniermittel |
| 19 | Schwenkaufnahme | 72 | Materialausschnitt |
| 20 | Schwenklagerachse | 73 | Verstärkungsanschlag |
| 30 | Vorderwand | 75 | Transportauflage |
| 31 | Hinterwand | | |
| 32a | erster Seitenrand | 76 | Transportauflagefläche |
| | | 77 | Führungswandung |
| 32b | zweiter Seitenrand | 78 | Führungswandfläche |
| 34 | Belade- und/oder Entladeöffnung | 79 | Faltkante |
| | | 80a, 80b | Mantellinie |
| 35a | erster Vorderwandabschnitt | | |
| 35b | zweiter Vorderwandabschnitt | 81 | Stützwandung |
| | | 85 | Kupplungselement |
| 36 | Bodenplatte (Bodenstruktur) | 86a | erster Lagerabschnitt |
| | | 86b | zweiter Lagerabschnitt |
| | | 87a | erster Strebenabschnitt |
| 37a | erste Längskante | | |
| 37b | zweite Längskante | 87b | zweiter Strebenabschnitt |
| 38a | erste Stirnkante | 88 | Materialausschnitt |
| 38b | zweite Stirnkante | 89 | Fixierstift |
| 39 | Stütz- und Auflagefläche | 90 | Begrenzungssteg |
| | | 91 | Bohrung / Vertiefung |
| 45a | erster Hinterwandabschnitt | | |
| 45b | zweiter Hinterwandabschnitt | 100 | Verstärkungselement |
| | | 101a | erster Aufnahmekanal |
| 46 | Seitenwandanschlag | 101b | zweiter Aufnahmekanal |
| 47 | Materialausschnitt | 102a | erster Drahtstab |
| 60 | Rahmengestell | 102b | zweiter Drahtstab |
| 104 | Entladestation | | |
| 139 | Öffnungs- und Schließvorrichtung | | |
| 140 | Entladevorrichtung | | |
| 141 | Mitnehmermechanik | | |
| 142 | Mitnehmermechanik | | |
| 143 | Tragrahmen | | |
| 144 | Tragrahmen | | |
| 145 | Einlaufabschnitt | | |
| 146 | Auslaufabschnitt | | |
| 147 | Endladeabschnitt | | |
| 148 | Führungskulisse | | |
| 149 | Führungskulisse | | |
| 150 | Führungskulisse | | |
| 156 | Betätigungsvorrichtung Entladevorrichtung | | |
| 157 | Kippachse | | |
| 158 | Bereitstellposition | | |
| 159 | Entladeposition | | |
| 160 | Antrieb | | |
| 161 | Rahmen | | |
| 162 | Führungsanordnung | | |
| 163 | Tragkonstruktion | | |
| 164 | Führungskulisse | | |
| 165 | Führungsrolle | | |
| 166 | Führungsrolle | | |
| 167 | Tragrahmen | | |
| 168 | Tragrahmen | | |
| 169 | Rahmenverbindung | | |
| 170 | Feststellvorrichtung | | |
| 171 | Antrieb | | |
| 172 | Arretierelement | | |
| 173 | Profilsteg | | |
| 175 | Führungsvorrichtung | | |

## Patentansprüche

1. Fördergutbehälter (2) für eine Hängefördervorrichtung (1) zum Transportieren von Fördergut (4), mit
einem zwischen einer Transportstellung und einer Belade- und/oder Endladestellung umstellbaren Taschenkörper,
einem Hängeträger (15) zum hängenden Transport des Fördergutbehälters (2) an der Hängefördervorrichtung (1),
einem Rahmengestell (60), über das der Taschenkörper an dem Hängeträger (15) hängt und durch welches der Taschenkörper zwischen der Transportstellung und der Beladeund/oder Endladestellung umstellbar ist, und welches Querstreben (63) oder Querstreben (63) und mit diesen verbundene Längsstreben (64) aufweist,
welcher Taschenkörper umfasst
- eine Vorderwand (30) und eine Hinterwand (31) aus biegeschlaffem Material,
- einen ersten Seitenrand (32a) und einen zweiten Seitenrand (32b) entlang der Vorderwand (30) und Hinterwand (31),
- eine an einer ersten Seite des Taschenkörpers zumindest bereichsweise zwischen der Vorder- und Hinterwand (30, 31) ausgebildete Belade- und/oder Endladeöffnung (34),
- einen an einer zweiten Seite des Taschenkörpers zumindest bereichsweise zwischen der Vorder- und Hinterwand (30, 31) ausgebildeten Seitenwandanschlag (46), gegen welchen das Fördergut (4) anlegbar ist,
wobei
- die Vorderwand (30)
einen ersten Vorderwandabschnitt (35a) und einen zweiten Vorderwandabschnitt (35b) ausbildet, und
im ersten Vorderwandabschnitt (35a) mit einer Bodenplatte (36) versehen ist, welche Bodenplatte (36)
- eine erste Längskante (37a),
- eine zur ersten Längskante (37a) mit einem Abstand verlaufende zweite Längskante (37b),
- eine zwischen der ersten Längskante (37a) und der zweiten Längskante (37b) verlaufende erste Stirnkante (38a), und
- eine zwischen der ersten Längskante (37a) und der zweiten Längskante (37b) verlaufende zweite Stirnkante (38b),
ausbildet, wobei die Bodenplatte (36) mit der ersten Stirnkante (38a) im Wesentlichen an den ersten Seitenrand (32a) und mit der zweiten Stirnkante (38b) im Wesentlichen an den zweiten Seitenrand (32b) angrenzt,
und
im zweiten Vorderwandabschnitt (35b) mit einem Materialausschnitt (70) versehen ist, welcher von dem Hängeträger (15) durchragt wird,
- die Hinterwand (31)
einen ersten Hinterwandabschnitt (45a) und einen zweiten Hinterwandabschnitt (45b) umfasst,
mit dem ersten Hinterwandabschnitt (45a) an den ersten Vorderwandabschnitt (35a) anschließt, und
im ersten Hinterwandabschnitt (45a) mit einer niedrigeren Steifigkeit ausgebildet ist als im ersten Vorderwandabschnitt (35a),
wobei der erste Hinterwandabschnitt (45a) in der Transportstellung des Taschenkörpers zwischen dem ersten Seitenrand (32a) und zweiten Seitenrand (32b) eine Transportauflage (75) ausbildet, welche eine in Richtung des Seitenwandanschlages (46) abfallende Transportauflagefläche (76) ausbildet, oder
wobei der erste Hinterwandabschnitt (45a) in der Belade- und/oder Endladestellung des Taschenkörpers zwischen dem ersten Seitenrand (32a) und zweiten Seitenrand (32b) eine gegenüber die Bodenplatte (36) vorragende Führungswandung (77) ausbildet, welche eine sich in Richtung der Beladeund/oder Endladeöffnung (34) verjüngende und im Wesentlichen vertikal ausgerichtete Führungswandfläche (78) ausbildet, oder
wobei der zweite Hinterwandabschnitt (45b) in der Transportstellung des Taschenkörpers zwischen dem ersten Seitenrand (32a) und zweiten Seitenrand (32b) eine in Richtung der Belade- und/oder Endladeöffnung (34) verjüngende Stützwandung (81) ausbildet, sodass das Fördergut (4) zwischen der Bodenplatte (36) im ersten Vorderwandabschnitt (35a) und der Stützwandung (81) im zweiten Hinterwandabschnitt (45b) klemmend gehalten wird,
- die Vorderwand (30) mit dem zweiten Vorderwandabschnitt (35b) an einer vorderen Querstrebe der Querstreben (63) und die Hinterwand (31) mit dem zweiten Hinterwandabschnitt (45b) an einer hinteren Querstrebe der Querstreben (63) angebracht sind,
und wobei
in der Transportstellung die Vorderwand (30) und Hinterwand (31) aneinander angenähert sind und das Fördergut (4) zwischen der Vorderwand (30) und Hinterwand (31) aufgenommen wird,
in der Belade- und/oder Endladestellung die Vorderwand (30) und Hinterwand (31) voneinander wegbewegt sind und die Belade- und/oder Endladeöffnung (34) durch die Vorderwand (30) und Hinterwand (31) begrenzt und an die erste Stirnkante (38a) der Bodenplatte (36) angrenzt,
**dadurch gekennzeichnet, dass**
die hintere Querstrebe (63) ein Positioniermittel (71) und die Hinterwand (31) am zweiten Hinterwandabschnitt (45b) einen Materialausschnitt (72) umfasst, welcher von dem Positioniermittel (71) durchragt wird.

2. Fördergutbehälter nach Anspruch 1, **dadurch gekennzeichnet, dass** die Transportauflage (75) durchgehend zwischen dem ersten Seitenrand (32a) und zweiten Seitenrand (32b) ausgebildet ist.

3. Fördergutbehälter nach Anspruch 1 oder 2, **dadurch gekennzeichnet, dass** die Führungswandung (77) durchgehend zwischen dem ersten Seitenrand (32a) und zweiten Seitenrand (32b) ausgebildet ist.

4. Fördergutbehälter nach einem der Ansprüche 1 bis 3, **dadurch gekennzeichnet, dass** der erste Hinterwandabschnitt (45a) des Taschenkörpers zwischen dem ersten Seitenrand (32a) und zweiten Seitenrand (32b) eine Führungswandung (77) ausbildet, welche in einem Wandabschnittsteil eine derart gestaltete Betätigungswandfläche ausbildet, mittels welcher
- das Fördergut (4) in Horizontalrichtung (H) mit einer ersten Kraftkomponente und in Vertikalrichtung (V) mit einer zweiten Kraftkomponente, oder
- das Fördergut (4) in Horizontalrichtung (H) mit einer ersten Kraftkomponente, in Vertikalrichtung (V) mit einer zweiten Kraftkomponente und in Tiefenrichtung (T) mit einer dritten Kraftkomponente
beaufschlagt wird, wenn der Taschenkörper von der Transportstellung in die Endladestellung umgestellt wird.

5. Fördergutbehälter nach Anspruch 1, **dadurch gekennzeichnet, dass** das Rahmengestell (60) relativ zum Hängeträger (15) um eine bevorzugt im Wesentlichen horizontal ausgerichtete Achse (61) schwenkbar gelagert ist.

6. Fördergutbehälter nach Anspruch 1, **dadurch gekennzeichnet, dass** die vordere Querstrebe einen ersten Strebenschaft (66a) und einen zweiten Strebenschaft (66b) umfasst, welche voneinander getrennt an den Längsstreben (64) rechtwinkelig vorragen und aufeinander zulaufen.

7. Fördergutbehälter nach einem der Ansprüche 1 bis 6, **dadurch gekennzeichnet, dass** der zweite Vorderwandabschnitt eine durch Umklappen des Materialendbereiches gebildete Schlaufe aufweist, durch welche die vordere Querstrebe (63) oder der erste Strebenschaft (66a) und zweite Strebenschaft (66b) der vorderen Querstrebe (63) hindurchgeführt ist.

8. Fördergutbehälter nach einem der Ansprüche 1 bis 7, **dadurch gekennzeichnet, dass** der zweite Hinterwandabschnitt (45b) eine durch Umklappen des Materialendbereiches gebildete Schlaufe aufweist, durch welche die hintere Querstrebe (63) hindurchgeführt ist.

9. Fördergutbehälter nach einem der Ansprüche 1 bis 8, **dadurch gekennzeichnet, dass** das Positioniermittel (71) durch eine an der hinteren Querstrebe (63) U-förmig gestaltete Ausformung gebildet ist, welche den Materialausschnitt (72) durchragt.

10. Fördergutbehälter nach Anspruch 1 oder 9, **dadurch gekennzeichnet, dass** der zweite Hinterwandabschnitt (45b) in dem das Positioniermittel (71) umgrenzenden und an den Materialausschnitt (72) angrenzenden Randbereich abschnittsweise oder umfänglich mit zumindest einem Verstärkungsanschlag (73; 73') versehen ist.

11. Entladestation (104) mit einem Fördergutbehälter (2), zum automatischen Entladen des mit zumindest einem Fördergut (4) beladenen Fördergutbehälters (2), welche Entladestation (104) umfasst
- eine Hängefördervorrichtung (1) zum Antransport des Fördergutbehälters (2) in die Entladestation (104) und Abtransport des Fördergutbehälters (2) aus der Entladestation (104),
- eine Öffnungs- und Schließvorrichtung (139) zum Verstellen des Taschenkörpers zwischen der Transportstellung (Schließstellung) und der Entladestellung (Öffnungsstellung), und
- eine Entladevorrichtung (140) zum Entladen des Fördergutbehälters (2), wobei die Entladevorrichtung (140) eine Betätigungsvorrichtung (156) umfasst, durch welche der Fördergutbehälter (2) mit dem Taschenkörper um eine im Wesentlichen parallel zur Längserstreckung der Hängefördervorrichtung (1) verlaufende Kippachse (157) zwischen einer Bereitstellposition (158) und einer Entladeposition (159) kippbar ist, wobei in der Entladeposition (159) das Fördergut (4) durch die Entladeöffnung (34) aus dem Fördergutbehälter (2) abgebbar ist,
**dadurch gekennzeichnet, dass** der Fördergutbehälter (2) nach einem der Ansprüche 1 bis 10 ausgebildet ist.

12. Entladestation (104) nach Anspruch 11, **dadurch gekennzeichnet, dass** die Öffnungsund Schließvorrichtung (139) eine Betätigungsvorrichtung (141, 142) zum automatischen Öffnen und Schließen des Taschenkörpers umfasst, durch welche das Rahmengestell (60) relativ zum Hängeträger (15) um die Achse (61) derart schwenkbar ist, dass der Taschenkörper zwischen der Transportstellung und der Belade- und/oder Entladestellung umstellbar ist.

13. Entladestation (104) nach Anspruch 12, **dadurch gekennzeichnet, dass** die Betätigungsvorrichtung eine Mitnehmermechanik (141, 142) mit einem in Transportrichtung (3) des Fördergutbehälters (2)
- stromaufwärts gelegenen Einlaufabschnitt (145),
- stromabwärts gelegenen Auslaufabschnitt (146), und
- zwischen dem Einlaufabschnitt (145) und Auslaufabschnitt (146) angeordneten Endladeabschnitt (147)
umfasst, wobei der Einlaufabschnitt (145) eine mit dem Rahmengestell (60) derart in einen Anlagekontakt bringbare geneigte Führungskulisse (148) ausbildet, dass das Rahmengestell (60) während des Antransportes des Fördergutbehälters (2) in die Entladestation (104) verschwenkt wird, wodurch der Taschenkörper aus der Transportstellung in die Belade- und/oder Entladestellung umgestellt wird.

14. Entladestation (104) nach Anspruch 13, **dadurch gekennzeichnet, dass** der Endladeabschnitt (147) eine mit dem Rahmengestell (60) derart in einen Anlagekontakt bringbare im Wesentlichen horizontale Führungskulisse (149) ausbildet, dass das Rahmengestell (60) während des Entladevorganges in der verschwenkten Auslenkstellung gehalten wird, wodurch auch der Taschenkörper in der Öffnungsstellung verbleibt.

15. Entladestation (104) nach Anspruch 13 oder 14, **dadurch gekennzeichnet, dass** der Auslaufabschnitt (146) eine mit dem Rahmengestell (60) derart in einen Anlagekontakt bringbare geneigte Führungskulisse (150) ausbildet, dass das Rahmengestell (60) während des Abtransportes des Fördergutbehälters (2) aus der Entladestation (104) verschwenkt wird, wodurch der Taschenkörper aus der Belade- und/oder Entladestellung in die Transportstellung umgestellt wird.

16. Entladestation (104) nach einem der Ansprüche 11 bis 15, **dadurch gekennzeichnet, dass** die Hängefördervorrichtung (1) zum Antransport des Fördergutbehälters (2) in die Entladestation (104) und Abtransport des Fördergutbehälters (2) aus der Entladestation (104) durch eine Antriebsvorrichtung (5) bewegbare Transportträger (7) umfasst, wobei der Transportträger (7) und der Hängeträger (15) gelenkig miteinander gekoppelt sind, wodurch der Hängeträger (15) um eine im Wesentlichen parallel zur Hängefördervorrichtung (1) verlaufende Achse (16) relativ zum Transportträger (7) schwenkbar ist.

17. Entladestation (104) nach Anspruch 12, **dadurch gekennzeichnet, dass** die Betätigungsvorrichtung (156) der Entladevorrichtung (140) einen mittels eines Antriebs (160) um eine parallel zur Transportrichtung (3) der Fördergutbehälter (2) verlaufende Achse zwischen einer Ausgangsstellung und einer Betätigungsstellung kippbaren Rahmen (161) umfasst und die Betätigungsvorrichtung (141, 142) der Öffnungs- und Schließvorrichtung (139) am Rahmen (161) gelagert ist.

## Claims

1. An article container (2) for an overhead conveying device (1) for transporting an article (4), comprising
a bag body that is adjustable between a transport position and a loading and/or unloading position,
a suspended support (15) for the suspended transport of the article container (2) on the overhead conveying device (1),
a frame (60), by means of which the bag body is suspended on the suspended support (15) and by means of which the bag body can be adjusted between the transport position and the loading and/or unloading position, and which has cross struts (63) or cross struts (63) with longitudinal struts (64) connected thereto,
which bag body comprises
- a front wall (30) and a rear wall (31) made from a flexible material,
- a first side edge (32a) and a second side edge (32b) along the front wall (30) and rear wall (31),
- a loading and/or unloading opening (34) formed on a first side of the bag body at least in some regions between the front and rear wall (30, 31),
- a side wall stop (46) formed on a second side of the bag body at least in some regions between the front and rear wall (30, 31), against which side wall stop (46) the article (4) can be placed,
wherein
- the front wall (30)
forms a first front wall section (35a) and a second front wall section (35b), and
is provided with a base plate (36) in the first front wall section (35a),
which base plate (36) forms
- a first longitudinal edge (37a),
- a second longitudinal edge (37b) extending at a distance from the first longitudinal edge (37a),
- a first end edge (38a) extending between the first longitudinal edge (37a) and the second longitudinal edge (37b), and
- a second end edge (38b) extending between the first longitudinal edge (37a) and the second longitudinal edge (37b),
wherein the base plate (36) essentially adjoins the first side edge (32a) with the first end edge (38a) and essentially adjoins the second side edge (32b) with the second end edge (38b),
and
is provided with a material cutout (70) in the second front wall section (35b), which material cutout (70) is penetrated by the suspended support (15),
- the rear wall (31)
comprises a first rear wall section (45a) and a second rear wall section (45b),
adjoins the first front wall section (35a) with the first rear wall section (45a), and having a lower rigidity in the first rear wall section (45a) than in the first front wall section (35a),
wherein, in the transport position of the bag body, the first rear wall section (45a) forms a transport rest (75) between the first side edge (32a) and second side edge (32b), which transport rest (75) forms a transport rest surface (76) sloping in the direction of the side wall stop (46), or
wherein, in the loading and/or unloading position of the bag body, the first rear wall section (45a) forms a guide wall (77), which protrudes beyond the base plate (36), between the first side edge (32a) and second side edge (32b), which guide wall (77) forms a guide wall surface (78), which tapers in the direction of the loading and/or unloading opening (34) and is oriented essentially vertically, or
wherein, in the transport position of the bag body, the second rear wall section (45b) forms a support wall (81), which tapers in the direction of the loading and/or unloading opening (34), between the first side edge (32a) and second side edge (32b), so that the article (4) is held clamped between the base plate (36) in the first front wall section (35a) and the support wall (81) in the second rear wall section (45b),
- the front wall (30) is mounted, with the second front wall section (35b), on a front cross strut of the cross struts (63), and the rear wall (31) is mounted, with the second rear wall section (45b), on a rear cross strut of the cross struts (63),
and wherein
the front wall (30) and rear wall (31) are approximated to one another in the transport position, and the article (4) is accommodated between the front wall (30) and rear wall (31),
the front wall (30) and rear wall (31) are moved away from each other in the loading and/or unloading position, and the loading and/or unloading opening (34) is delimited by the front wall (30) and rear wall (31) and adjoins the first end edge (38a) of the base plate (36),
**characterized in that**
the rear cross strut (63) comprises a positioning means (71), and the rear wall (31) comprises a material cutout (72) on the second rear wall section (45b), which material cutout (72) is penetrated by the positioning means (71).

2. The article container according to claim 1, **characterized in that** the transport rest (75) is formed continuously between the first side edge (32a) and second side edge (32b).

3. The article container according to claim 1 or 2, **characterized in that** the guide wall (77) is formed continuously between the first side edge (32a) and second side edge (32b).

4. The article container according to one of claims 1 to 3, **characterized in that** the first rear wall section (45a) of the bag body forms a guide wall (77) between the first side edge (32a) and second side edge (32b), which guide wall (77) forms a thus designed actuation wall surface, by means of which
- the article (4) is acted upon with a first force component in the horizontal direction (H) and with a second force component in the vertical direction (V), or
- the article (4) is acted upon with a first force component in the horizontal direction (H), with a second force component in the vertical direction (V), and with a third force component in a depth direction (T)
if the bag body is adjusted from the transport position into the unloading position.

5. The article container according to claim 1, **characterized in that** the frame (60) is mounted so as to be pivotable relative to the suspended support (15) about an axis (61) preferably being oriented essentially horizontally.

6. The article container according to claim 1, **characterized in that** the front cross strut comprises a first strut shank (66a) and a second strut shank (66b), which protrude separately from each other, orthogonally on the longitudinal struts (64) and run towards each other.

7. The article container according to one of claims 1 to 6, **characterized in that** the second front wall section has a loop formed by folding over the material end region, and the front cross strut (63) or the first strut shank (66a) and second strut shank (66b) of the front cross strut (63) is threaded through the loop.

8. The article container according to one of claims 1 to 7, **characterized in that** the second rear wall section (45b) comprises a loop formed by folding over the material end region, and the rear cross strut (63) is threaded through the loop.

9. The article container according to one of claims 1 to 8, **characterized in that** the positioning means (71) is formed by a shaping having a U-shaped design on the rear cross strut (63), which shaping penetrates the material cutout (72).

10. The article container according to claim 1 or 9, **characterized in that** the second rear wall section (45b) is provided, in some sections or circumferentially, with at least one reinforcing stop (73; 73') in the edge region bounding the positioning means (71) and adjoining the material cutout (72).

11. An unloading station (104) with an article container (2), for automatic unloading of the article container (2) loaded with at least one article (4), which unloading station (104) comprises
- an overhead conveying device (1) for transporting the article container (2) into the unloading station (104) and transporting the article container (2) out of the unloading station (104),
- an opening and closing device (139) for adjusting the bag body between the transport position (closed position) and the unloading position (opened position), and
- an unloading device (140) for unloading the article container (2), wherein the unloading device (140) comprises an actuation device (156), by means of which the article container (2) with the bag body can be tilted about a tilting axis (157) extending essentially in parallel to the longitudinal extension of the overhead conveying device (1) between a provisioning position (158) and an unloading position (159), wherein in the unloading position (159), the articles (4) can be discharged from the article container (2) through the unloading opening (34),
**characterized in that** the article container (2) is formed according to one of claims 1 to 10.

12. The unloading station (104) according to claim 11, **characterized in that** the opening and closing device (139) comprises an actuation device (141, 142) for automatic opening and closing of the bag body, by means of which actuation device (141, 142) the frame (60) can be pivoted about the axis (61) relative to the suspended support (15) such that the bag body can be adjusted between the transport position and the loading and/or unloading position.

13. The unloading station (104) according to claim 12, **characterized in that** the actuation device comprises a driver mechanism (141, 142) having
- an inlet section (145) aligned upstream in a transport direction (3) of the article container (2),
- an outlet section (146) aligned downstream in the transport direction (3) of the transport bag, and
- an unloading section (147) arranged between the inlet section (145) and the outlet section (146),
wherein the inlet section (145) forms a tilted guide track (148) that can be brought into an abutting contact with the frame (60) such that the frame (60) is pivoted during the transport of the article container (2) into the unloading station (104), whereby the bag body is adjusted from the transport position into the loading and/or unloading position.

14. The unloading station (104) according to claim 13, **characterized in that** the unloading section (147) forms an essentially horizontal guide track (149) that can be brought into an abutting contact with the frame (60) such that the frame (60) is held in the pivoted deflection position during the unloading operation, whereby the bag body also remains in the opened state.

15. The unloading station (104) according to claim 13 or 14, **characterized in that** the outlet section (146) forms a tilted guide track (150) that can be brought into an abutting contact with the frame (60) such that the frame (60) is pivoted during the transport of the article container (2) out of the unloading station (104), whereby the bag body is adjusted from the loading and/or unloading position into the transport position.

16. The unloading station (104) according to one of claims 11 to 15, **characterized in that** the overhead conveying device (1), for the transport of the article container (2) into the unloading station (104) and for the transport of the article container (2) out of the unloading station (104), comprises transport carriers (7) movable by means of a drive device (5), wherein the transport carrier (7) and the suspended support (15) are coupled to one another in an articulated manner, whereby the suspended support (15) is pivotable about an axis (16) extending essentially in parallel to the overhead conveying device (1) relative to the transport carrier (7).

17. The unloading station (104) according to claim 12, **characterized in that** the actuation device (156) of the unloading device (140) comprises a frame structure (161) that can be tilted by means of a drive (160) between an initial position and an actuation position about an axis extending in parallel to the transport direction (3) of the article container (2), and the actuation device (141, 142) of the opening and closing device (139) is mounted on the frame structure (161).

## Revendications

1. Contenant pour produits à transporter (2) pour un dispositif de transport suspendu (1) pour le transport d'un produit à transporter (4), avec
un corps à poche pouvant être commuté entre une position de transport et une position de chargement et/ou de déchargement,
un support suspendu (15) pour le transport suspendu du contenant pour produits à transporter (2) sur le dispositif de transport suspendu (1),
un châssis (60), par l'intermédiaire duquel le corps à poche est suspendu au support suspendu (15) et grâce auquel le corps à poche peut être commuté entre la position de transport et la position de chargement et/ou de déchargement et qui comprend des entretoises transversales (63) ou des entretoises transversales (63) et des entretoises longitudinales (64) reliés avec celles-ci,
ce corps à poche comprenant
- une paroi avant (30) et une paroi arrière (31) en matériau flexible,
- un premier bord latéral (32a) et un deuxième bord latéral (32b) le long de la paroi avant (30) et de la paroi arrière (31),
- une ouverture de chargement et/ou de déchargement (34) réalisée sur un premier côté du corps à poche, au moins à certains endroits entre les parois avant et arrière (30, 31),
- une butée de paroi latérale (46), réalisée sur un deuxième côté du corps à poche, au moins à certains endroits entre les parois avant et arrière (30, 31), contre laquelle le produit à transporter (4) peut être appuyé,
dans lequel
- la paroi avant (30)
forme une première portion de paroi avant (35a) et une deuxième portion de paroi avant (35b) et
est munie, dans la première portion de paroi avant (35a), d'une plaque de fond (36), cette plaque de fond (36) présentant
- une première arête longitudinale (37a)
- une deuxième arête longitudinale (37b) s'étendant à une certaine distance de la première arête longitudinale (37a),
- une première arête frontale (38a) s'étendant entre la première arête longitudinale (37a) et la deuxième arête longitudinale (37b) et
- une deuxième arête frontale (38b) s'étendant entre la première arête longitudinale (37a) et la deuxième arête longitudinale (37b),
dans lequel la plaque de fond (36) est globalement adjacente, avec la première arête frontale (38a), au premier bord latéral (32a) et, avec la deuxième arête frontale (38b), au deuxième bord latéral (32b),
et
est munie dans la deuxième portion de paroi avant (35b), d'une découpe de matériau (70) qui est traversée par le support suspendu (15),
- la paroi arrière (31)
comprend une première portion de paroi arrière (45a) et une deuxième portion de paroi arrière (45b),
se raccorde, avec la première portion de paroi arrière (45a), à la première portion de paroi avant (35a) et
présente, dans la première portion de paroi arrière (45a), une rigidité plus faible que dans la première portion de paroi avant (35a),
dans lequel la première portion de paroi arrière (45a) forme, dans la position de transport du corps à poche, entre le premier bord latéral (32a) et le deuxième bord latéral (32b), un appui de transport (75) qui présente une surface d'appui de transport (76) descendant en direction de la butée de paroi latérale (46) ou
dans lequel la première portion de paroi arrière (45a) forme, dans la position de chargement et/ou de déchargement du corps à poche, entre le premier bord latéral (32a) et le deuxième bord latéral (32b), une paroi de guidage (77) dépassant de la plaque de fond (36), qui présente une surface de paroi de guidage (78) qui se rétrécit en direction de l'ouverture de chargement et/ou de déchargement (34) et qui est orientée de manière globalement verticale ou
dans lequel la deuxième portion de paroi arrière (45b) forme, dans la position de transport du corps à poche, entre le premier bord latéral (32a) et le deuxième bord latéral (32b), une paroi d'appui (81) qui se rétrécit dans la direction de l'ouverture de chargement et/ou de déchargement (34), de sorte que le produit à transporter (4) est maintenu de manière serrée entre la plaque de fond (36) dans la première portion de paroi avant (35a) et la paroi d'appui (81) dans la deuxième portion de paroi arrière (45b),
- la paroi avant (30) est montée, avec la deuxième portion de paroi avant (35b), sur une entretoise transversale avant des entretoises transversales (63) et la paroi arrière (31) est montée, avec la deuxième portion de paroi arrière (45b), sur une entretoise transversale arrière des entretoises transversales (63),
et dans lequel
dans la position de transport, la paroi avant (30) et la paroi arrière (31) sont rapprochées l'une de l'autre et le produit à transporter (4) est logé entre la paroi avant (30) et la paroi arrière (31),
dans la position de chargement et/ou de déchargement, la paroi avant (30) et la paroi arrière (31) sont éloignées l'une de l'autre et l'ouverture de chargement et/ou de déchargement (34) est limitée par la paroi avant (30) et la paroi arrière (31) et est adjacent à la première arête frontale (38a) de la plaque de fond (36),
**caractérisé en ce que**
l'entretoise transversale arrière (63) comprend un moyen de positionnement (71) et la paroi arrière (31) présente, sur la deuxième portion de paroi arrière (45b), une découpe de matériau (72) qui est traversée par le moyen de positionnement (71).

2. Contenant de produit à transporter selon la revendication 1, **caractérisé en ce que** l'appui de transport (75) est formé de manière continue entre le premier bord latéral (32a) et le deuxième bord latéral (32b).

3. Contenant de produit à transporter selon la revendication 1 ou 2, **caractérisé en ce que** la paroi de guidage (77) est formée de manière continue entre le premier bord latéral (32a) et le deuxième bord latéral (32b).

4. Contenant de produit à transporter selon l'une des revendications 1 à 3, **caractérisé en ce que** la première portion de paroi arrière (45a) du corps à poche forme, entre le premier bord latéral (32a) et le deuxième bord latéral (32b), une paroi de guidage (77) qui présente, dans une partie de portion de paroi, une surface de paroi d'actionnement grâce à laquelle
- le produit à transporter (4) est sollicité dans la direction horizontale (H) avec une première composante de force et dans la direction verticale (V) avec une deuxième composante de force ou
- le produit à transporter (4) est sollicité dans la direction horizontale (H) avec une première composante de force et dans la direction verticale (V) avec une deuxième composante de force et dans la direction de la profondeur (T) avec une troisième composante de force,
lorsque le corps à poche est commuté de la position de transport vers la position de déchargement.

5. Contenant de produit à transporter selon la revendication 1, **caractérisé en ce que** le châssis (60) est logé de manière pivotante par rapport au support suspendu (15) autour d'un axe (61) orienté de préférence de manière globalement horizontale.

6. Contenant de produit à transporter selon la revendication 1, **caractérisé en ce que** l'entretoise transversale avant comprend une première tige d'entretoise (66a) et une deuxième tige d'entretoise (66b), qui dépassent séparément entre elles et perpendiculairement aux entretoises longitudinales (64) et convergent l'une vers l'autre.

7. Contenant de produit à transporter selon l'une des revendications 1 à 6, **caractérisé en ce que** la deuxième portion de paroi avant comprend une boucle, formée par le rabattement de la partie d'extrémité du matériau, à travers laquelle l'entretoise transversale avant (63) ou la première tige d'entretoise (66a) et la deuxième tige d'entretoise (66b) de l'entretoise transversale avant (63) sont guidées.

8. Contenant de produit à transporter selon l'une des revendications 1 à 7, **caractérisé en ce que** la deuxième portion de paroi arrière (45b) comprend une boucle, formée par le rabattement de la partie d'extrémité du matériau, à travers laquelle l'entretoise transversale arrière (63) est guidée.

9. Contenant de produit à transporter selon l'une des revendications 1 à 8, **caractérisé en ce que** le moyen de positionnement (71) est constitué d'une déformation en forme de U au niveau de l'entretoise transversale arrière (63), qui traverse la découpe de matériau (72).

10. Contenant de produit à transporter selon l'une des revendications 1 ou 9, **caractérisé en ce que** la deuxième portion de paroi arrière (45b) est munie, dans la partie de bord entourant le moyen de positionnement (71) et adjacente à la découpe de matériau (72), à certains endroits ou sur la périphérie, d'au moins une butée de renforcement (73 ; 73').

11. Station de déchargement (104) avec un contenant de produit à transporter (2), pour le déchargement automatique du contenant de produit à transporter (2) chargé avec au moins un produit à transporter (4), cette station de déchargement (104) comprenant
- un dispositif de transport suspendu (1) pour le transport du contenant de produit à transporter (2) vers la station de déchargement (104) et le transport du contenant de produit à transporter (2) hors de la station de déchargement (104),
- un dispositif d'ouverture et de fermeture (139) pour le déplacement du corps à poche entre la position de transport (position de fermeture) et la position de déchargement (position d'ouverture) et
- un dispositif de déchargement (140) pour le déchargement du contenant de produit à transporter (2), dans lequel le dispositif de déchargement (140) comprend un dispositif d'actionnement (156), grâce auquel le contenant de produit à transporter (2) peut être basculé avec le corps à poche autour d'un axe de basculement (157) s'étendant de manière globalement parallèle à l'extension longitudinale du dispositif de transport suspendu (1), entre une position de mise à disposition (158) et une position de déchargement (159), dans lequel, dans la position de déchargement (159), le produit à transporter (4) peut être évacué, à travers l'ouverture de déchargement (34), hors du contenant de produit à transporter (2),
**caractérisée en ce que** le contenant de produit à transporter (2) est conçu selon l'une des revendications 1 à 10.

12. Station de déchargement (104) selon la revendication 11, **caractérisée en ce que** le dispositif d'ouverture et de fermeture (139) comprend un dispositif d'actionnement (141, 142) pour l'ouverture et la fermeture automatique du corps à poche, grâce auquel le châssis (60) peut être pivoté par rapport au support suspendu (15) autour de l'axe (61) de sorte que le corps à poche peut être commuté entre la position de transport et la position de chargement et/ou de déchargement.

13. Station de déchargement (104) selon la revendication 12, **caractérisée en ce que** le dispositif d'actionnement comprend un mécanisme d'entraînement (141, 142) avec
- une portion d'entrée (145) disposée en amont,
- une portion de sortie (146) disposée en aval et
- une portion de déchargement (147) disposée entre la portion d'entrée (145) et la portion de sortie (146),
dans la direction de transport (3) du contenant de produit à transporter (2), dans laquelle la portion d'entrée (145) forme une coulisse de guidage inclinée (148), pouvant être mise en contact d'appui avec le châssis (60), de sorte que le châssis (60) est pivoté, pendant le transport du contenant de produit à transporter (2), vers la position de déchargement (104), ce qui permet de commuter le corps à poche de la position de transport vers la position de chargement et/ou de déchargement.

14. Station de déchargement (104) selon la revendication 13, **caractérisée en ce que** la portion de déchargement (147) forme une coulisse de guidage globalement horizontale (149), pouvant être mise en contact d'appui avec le châssis (60), de sorte que le châssis (60) est maintenu, pendant le processus de déchargement, dans la position de déflexion pivotée, ce qui fait en sorte que le corps à poche reste également dans la position d'ouverture.

15. Station de déchargement (104) selon la revendication 13 ou 14, **caractérisée en ce que** la portion de sortie (146) forme une coulisse de guidage inclinée (150), pouvant être mise en contact d'appui avec le châssis (60), de sorte que le châssis (60) est pivoté pendant le transport du contenant de produit à transporter (2) hors de la station de déchargement (104), ce qui permet de commuter le corps à poche de la position de chargement et/ou de déchargement vers la position de transport.

16. Station de déchargement (104) selon l'une des revendications 11 à 15, **caractérisée en ce que** le dispositif de transport suspendu (1) comprend, pour le transport du contenant de produit à transporter (2) vers la station de déchargement (104) et le transport du contenant de produit à transporter (2) hors de la station de déchargement (104), un support de transport (7) entraîné par un dispositif d'entraînement (5), dans laquelle le support de transport (7) et support suspendu (15) sont couplés entre eux de manière articulée, ce qui permet de pivoter le support suspendu (15) autour d'un axe (16) s'étendant de manière globalement parallèle au dispositif de transport suspendu (1), par rapport au support de transport (7).

17. Station de déchargement (104) selon la revendication 12, **caractérisée en ce que** le dispositif d'actionnement (156) du dispositif de déchargement (140) comprend un cadre (161) pouvant être basculé entre une position initiale et une position d'actionnement, au moyen d'un entraînement (160), autour d'un axe s'étendant parallèlement à la direction de transport (3) des contenants de produit à transporter (2) et le dispositif d'actionnement (141, 142) du dispositif d'ouverture et de fermeture (139) est logé sur le cadre (161).
